# EUROPEAN PATENT APPLICATION

(11) **EP 3 456 488 A1**
(43) Date of publication of application: **20.03.2019**
(21) Application number: 18192841.7
(22) Date of filing: 06.09.2018
(51) Int. Cl.: B25J 9/16, B65B 3/00, A61J 1/20

(54) **PREPARATION ASSISTING SYSTEM AND PREPARATION METHOD USING ROBOT**

(30) Priority: 11.09.2017 JP 2017174083
(71) Applicant: Kabushiki Kaisha Yaskawa Denki, Kitakyushu-shi, Fukuoka 806-0004 (JP)
(72) Inventor: MURAKAMI, Hiroaki, Kitakyushu-shi, Fukuoka (JP); TASAKA, Shigeji, Kitakyushu-shi, Fukuoka (JP); NOMURA, Masayuki, Kitakyushu-shi, Fukuoka (JP); KURIHARA, Teruhiro, Kitakyushu-shi, Fukuoka (JP); SUYAMA, Takashi, Kitakyushu-shi, Fukuoka (JP); SHIBAHARA, Oki, Kitakyushu-shi, Fukuoka (JP)
(74) Representative: Grünecker Patent- und Rechtsanwälte PartG mbB

(57) **Abstract**

A preparation assisting system includes a robot and a robot controller. The robot is configured to prepare a medical/chemical solution using a medical/chemical agent contained in an agent container. The robot controller is configured to control the robot to perform a preparation operation including a special operation command corresponding to a kind of the agent container.

## Description

### BACKGROUND

### FIELD OF THE INVENTION

The present invention relates to a preparation assisting system and a preparation method using a robot.

### DISCUSSION OF THE BACKGROUND

JP 2016-144537A discloses a medical/chemical solution preparation system including a preparation chamber. In the preparation chamber, a robot prepares a medical/chemical solution.

The contents of JP 2016-144537A are incorporated herein by reference in their entirety.

For medical/chemical solution preparation systems to perform preparation processing more accurately and in shortened takt time at the same time, it is necessary to further optimize preparation operations performed by robots.

The present invention has been made in view of the above circumstances, and it is an object of the present invention to provide such a preparation assisting system and such a preparation method using a robot that enables preparation processing to be performed more accurately and in shortened takt time at the same time.

### SUMMARY

According to one aspect of the present disclosure, a preparation assisting system includes a robot and a robot controller. The robot is configured to prepare a medical/chemical solution using a medical/chemical agent contained in an agent container. The robot controller is configured to control the robot to perform a preparation operation including a special operation command corresponding to a kind of the agent container.

According to another aspect of the present disclosure, a preparation method using a robot includes obtaining a prescription command for a medical/chemical solution. A preparation operation is selected from among a plurality of kinds of preparation operations including special operation commands respectively corresponding to a plurality of kinds of an agent container. The preparation operation corresponds to the prescription command. The robot is controlled to prepare, based on the selected preparation operation, the medical/chemical solution using a medical/chemical agent contained in the agent container.

The present invention enables preparation processing to be performed more accurately and in shortened takt time at the same time.

### BRIEF DESCRIPTION OF THE DRAWINGS

A more complete appreciation of the present invention and many of the attendant advantages thereof will be readily obtained as the same becomes better understood by reference to the following detailed description when considered in connection with the accompanying drawings, wherein:
FIG. 1 illustrates an example schematic configuration of a preparation assisting system according to an embodiment;
FIG. 2 illustrates example configurations of a robot and other elements of the preparation assisting system;
FIG. 3 illustrates an example configuration of the robot;
FIG. 4 illustrates an example configuration of a preparation device;
FIG. 5 illustrates an example functional configuration of a robot controller;
FIG. 6 is a flowchart of example steps of preparation processing of preparing a medical/chemical solution;
FIG. 7 is a flowchart of example steps of dissolving-agitating processing of dissolving and agitating a medical/chemical agent;
FIG. 8A illustrates an example preparation operation of preparing a medical/chemical solution performed by the robot and the preparation device;
FIG. 8B illustrates an example preparation operation of preparing a medical/chemical solution performed by the robot and the preparation device;
FIG. 8C illustrates an example preparation operation of preparing a medical/chemical solution performed by the robot and the preparation device;
FIG. 9A illustrates an example preparation operation of preparing a medical/chemical solution performed by the robot and the preparation device;
FIG. 9B illustrates an example preparation operation of preparing a medical/chemical solution performed by the robot and the preparation device;
FIG. 10A illustrates an example preparation operation performed by the robot in a case of a powdery medical/chemical agent;
FIG. 10B illustrates an example preparation operation performed by the robot in a case of a powdery medical/chemical agent;
FIG. 11A illustrates an example preparation operation performed by the robot in a case of a powdery medical/chemical agent;
FIG. 11B illustrates an example preparation operation performed by the robot in a case of a powdery medical/chemical agent;
FIG. 11C illustrates an example preparation operation performed by the robot in a case of a powdery medical/chemical agent;
FIG. 11D illustrates an example preparation operation performed by the robot and the preparation device in a case of a powdery medical/chemical agent;
FIG. 11E illustrates an example preparation operation performed by the robot and the preparation device in a case of a powdery medical/chemical agent;
FIG. 12 is a table of an example special preparation operation set on an agent-container basis;
FIG. 13 illustrates an example solution surface injection operation;
FIG. 14 illustrates an example syringe air removal operation;
FIG. 15 is a flowchart of example steps of preparation processing of preparing a medical/chemical solution with an additional step of tipping and mixing operation;
FIG. 16 illustrates an example tipping and mixing operation;
FIG. 17A illustrates an example rubber stopper shape mounted on an opening of an agent container;
FIG. 17B illustrates an example rubber stopper shape mounted on the opening of the agent container;
FIG. 17C illustrates an example rubber stopper shape mounted on the opening of the agent container;
FIG. 18 illustrates an example rotational sampling operation;
FIG. 19A illustrates an example air replacement operation performed above the solution surface;
FIG. 19B illustrates the example air replacement operation performed above the solution surface;
FIG. 19C illustrates the example air replacement operation performed above the solution surface;
FIG. 19D illustrates the example air replacement operation performed above the solution surface;
FIG. 20A illustrates an example entire-amount sampling operation;
FIG. 20B illustrates an example entire-amount sampling operation;
FIG. 20C illustrates an example entire-amount sampling operation;
FIG. 20D illustrates an example entire-amount sampling operation;
FIG. 21 is a flowchart of example steps of dissolving-agitating processing of dissolving and agitating a medical/chemical agent with an additional step of rotating and mixing operation;
FIG. 22 illustrates an example rotating and mixing operation;
FIG. 23 is a flowchart of example steps of preparation processing of preparing a medical/chemical solution with an additional step of infusion solution discharge operation;
FIG. 24A illustrates an example infusion solution discharge operation;
FIG. 24B illustrates an example infusion solution discharge operation;
FIG. 25 is a flowchart of example steps of dissolving-agitating processing of dissolving and agitating a medical/chemical agent with an additional step of negative pressure reduction operation; and
FIG. 26 illustrates an example hardware configuration of a controller.

### DESCRIPTION OF THE EMBODIMENTS

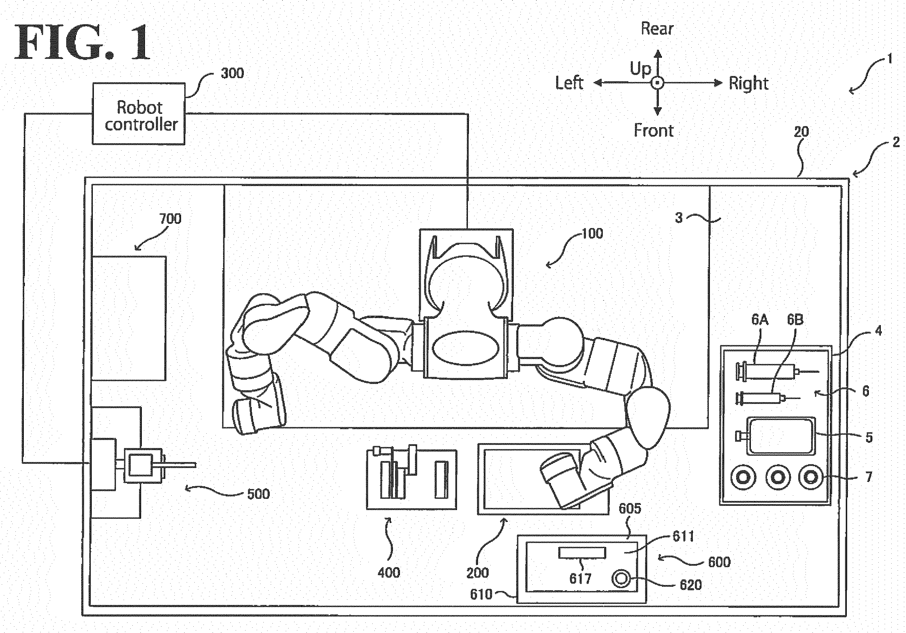

The embodiments will now be described with reference to the accompanying drawings, wherein like reference numerals designate corresponding or identical elements throughout the various drawings. For convenience of description of the preparation assisting system and related elements, directions indicated by "upward", "downward", "rightward", "leftward", "frontward", and "rearward" are indicated in the drawings such as in FIGs. 1 to 3. It should be noted, however, that these directions may vary depending on where to install the preparation assisting system and other and related elements, and should not be construed as limiting their positions in relation to each other.

### 1. General Arrangement of Preparation Assisting System

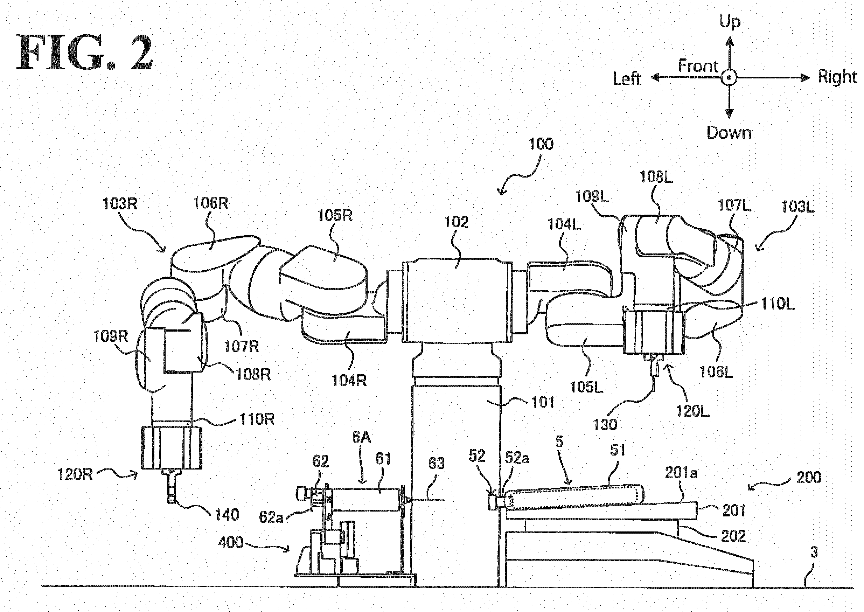

By referring to FIGs. 1 and 2, a schematic configuration of a preparation assisting system 1 according to this embodiment will be described. As used herein, the term medical/chemical agent refers to a substance subjected to a preparation operation, and the term medical/chemical solution refers to a substance obtained as a result of the preparation operation. These terms, however, are used for convenience of description and not intended in a strictly accurate sense.

The preparation assisting system 1 is a preparation system that uses a robot to assist preparation of a medical/chemical solution using a medical/chemical agent. As illustrated in FIG. 1, the preparation assisting system 1 includes a preparation chamber 2, a robot 100, and a robot controller 300. The robot 100 is contained in the preparation chamber 2. The robot controller 300 controls the robot 100.

The preparation chamber 2 is a preparation chamber in which the robot 100 is able to perform preparation work. The preparation chamber 2 has a function of preventing internal atmosphere from escaping outside the preparation chamber 2. In addition to or instead of this function, the preparation chamber 2 may have a function of adjusting air flow in the internal space and/or a function of keeping the internal space germfree. The preparation chamber 2 includes an approximately rectangular parallelepiped housing 20. It will be understood by those skilled in the art that the housing 20 may have a shape other than an approximately rectangular parallelepiped shape. Other examples include an approximately cubic shape and an approximately cylindrical shape. Examples of the preparation chamber 2 include, but are not limited to, a "safety cabinet", a draft chamber, a clean bench, and an isolator.

In the housing 20, the robot 100 and a work table 3 are arranged. In this embodiment, the work table 3 approximately surrounds the robot 100, at the front, left, and right sides of the robot 100. It will be understood by those skilled in the art that the work table 3 may have any other shape.

On the work table 3, a plurality of devices are arranged within the movable range of the robot 100. The plurality of devices include a tray 4, an electronic balance 200, a holding device 400, a preparation device 500, a washer 600, and an agitator 700. On the tray 4, a plurality of instruments used for solution preparation are placed. In this embodiment, the tray 4 is located to the right of the robot 100; the electronic balance 200, the holding device 400, and the washer 600 are located in front of the robot 100; and the preparation device 500 and the agitator 700 are located to the left of the robot 100. It will be understood by those skilled in the art that these devices may be located at any other positions within the movable range of the robot 100, and any other kinds of devices may be located within the movable range of the robot 100.

On the tray 4, solution-preparation instruments are placed, such as a bag 5, a syringe 6, and agent containers 7. The preparation assisting system 1 uses the bag 5, the syringe 6, the agent containers 7, and other solution-preparation instruments to prepare a medical/chemical solution and/or an infusion solution. It will be understood by those skilled in the art that any other instruments may be placed on the tray 4.

As illustrated in FIG. 2, the bag 5 (which is a non-limiting example of the solution container recited in the appended claims) includes a bag body 51 and a port member 52. The bag body 51 has a bag-shaped structure made up of two flexible and transparent resin sheets of the same dimensions. The bag shape is made by superimposing the two resin sheets on each other and attaching the edges of the two resin sheets to each other by heat welding or another method of attachment. The port member 52 is made of plastic and held between the two resin sheets at one end of the bag body 51. The port member 52 has an opening (not illustrated) fitted with a rubber stopper (not illustrated). The rubber stopper is for a syringe needle 63 of the syringe 6 to be inserted and removed into and from. The bag 5 is filled with an infusion solution, such as saline solution and dextrose solution, and is used in the preparation assisting system 1 to prepare a medical/chemical solution or an infusion solution. The prepared medical/chemical solution or infusion solution in the bag 5 is administered to a patient through devices such as a bottle needle and a drip infusion tube, which are not illustrated.

The syringe 6 (which is a non-limiting example of the syringe recited in the appended claims) is used to transfer an infusion solution and/or other substance. The syringe 6 includes various kinds of syringes that differ in diameter and/or length so that a variety of kinds and amounts of infusion solutions can be transferred using suitable syringes. In the embodiment illustrated in FIG. 1, for convenience of description, the syringe 6 includes two kinds of syringes 6A and 6B, which differ in diameter and length. In other possible embodiments, one kind of syringe 6 may be used, or three or more kinds of syringes may be used.

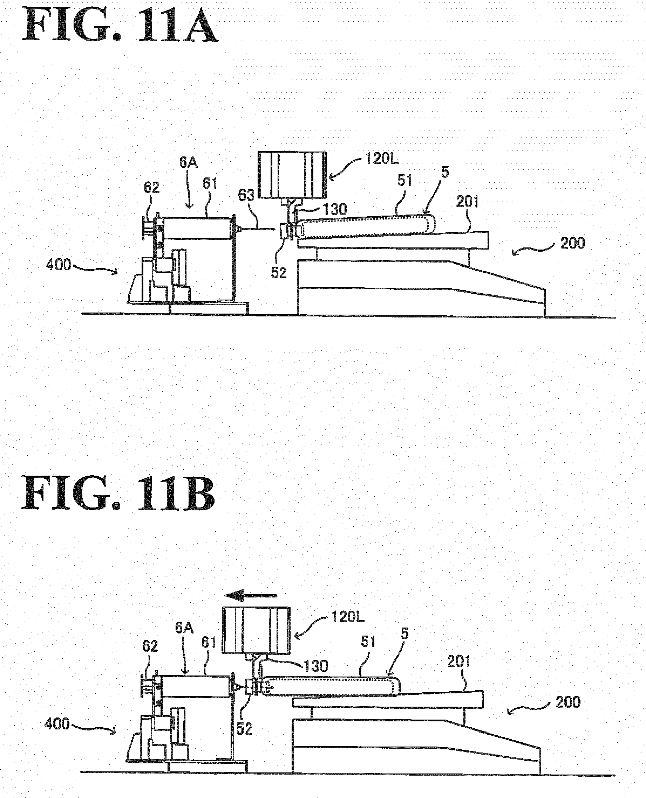

In FIG. 2 (and FIG. 11A, described later), the syringe 6A is set on the holding device 400. The syringe 6A, which is the larger syringe in diameter and length, has a syringe capacity of 50 ml, for example. As illustrated in FIG. 2 (and FIG. 11A, described later), the syringe 6A includes an outer cylinder 61, a plunger 62, and the syringe needle 63. The plunger 62 is capable of reciprocating relative to the outer cylinder 61. The syringe needle 63 is mounted on the leading end of the outer cylinder 61. The syringe 6B, which is the smaller syringe in diameter and length, has a syringe capacity of 20 ml, for example. The syringe 6B is similar in configuration to the syringe 6A, and the syringes 6A and 6B will be hereinafter collectively described as the syringe 6A.

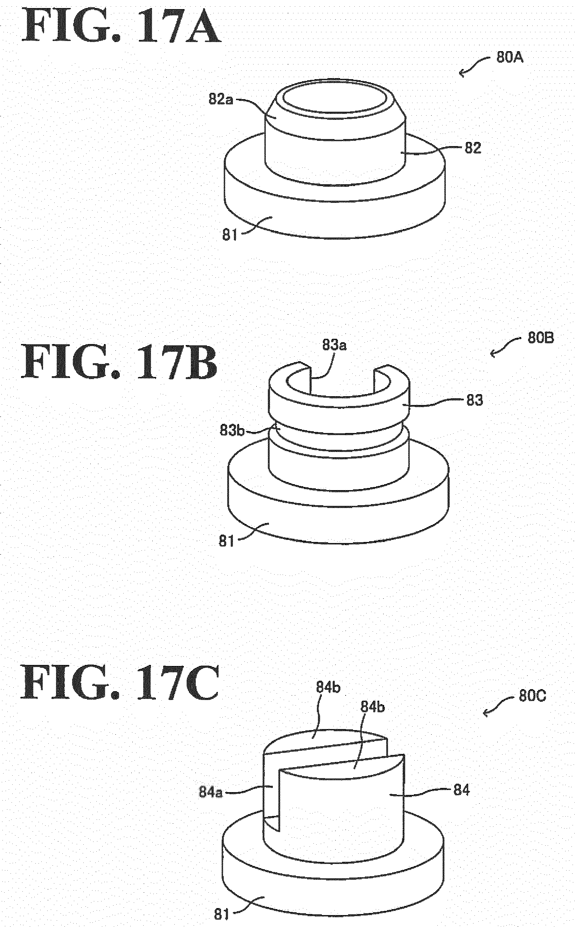

Each of the agent containers 7 is a "vial", and includes elements such as a glass bottle and a rubber stopper 80 (see FIG. 17, described later). Each agent container 7 contains a powdery or liquid medical/chemical agent. When the preparation assisting system 1 prepares a medical/chemical solution using a liquid medical/chemical agent, a predetermined amount of infusion solution is taken from the bag 5 using the syringe 6, and a predetermined amount of liquid medical/chemical agent is taken from the agent container 7 and injected into the bag 5. In the bag 5, the infusion solution and the medical/chemical agent are mixed together, resulting in a medical/chemical solution. When the preparation assisting system 1 prepares a medical/chemical solution using a powdery medical/chemical agent, a predetermined amount of infusion solution is taken from the bag 5 using the syringe 6, and the infusion solution is injected into the agent container 7 containing a powdery medical/chemical agent. Then, a mixture of the medical/chemical agent and the infusion solution is agitated at the agitator 700. In this manner, the powdery medical/chemical agent is subjected to dissolving-agitating processing. Then, the medical/chemical agent done with the dissolving-agitating processing is taken from the agent container 7 using the syringe 6 and injected into the bag 5. A similar procedure applies in preparation of an infusion solution. While in FIG. 1 three agent containers 7 are placed on the tray 4, this configuration is not intended as limiting the number of agent containers 7 used in one round of preparation work. Also, the agent containers 7 will not be limited to glass vial bottles but may be resin containers, for example.

Further, the agent containers 7 may not necessarily contain a medical/chemical agent but may contain water, saline solution, or diluted solution such as sugar solution. Also, the agent containers 7 may be the same agent containers or may be different in kind from each other in a case where the agent containers 7 contain different kinds of medical/chemical agents and/or different amounts of medical/chemical agents. The kinds of agent containers 7 may be specified in advance and recorded in a control system such as in the robot controller 300.

As illustrated in FIG. 2, the electronic balance 200 includes a table 201. On the table 201, the bag 5 is placed in a flat position. The table 201 includes a placement surface 201a. The placement surface 201a is inclined such that the left end of the placement surface 201a is lower than the right end of the placement surface 201a. In other words, the placement surface 201a is inclined such that the port member 52 of the bag 5 is lower than the opposite end of the bag body 51 opposite to the port member 52.

The electronic balance 200 measures the mass of the bag 5 placed on the electronic balance 200. The measured mass data is output from the electronic balance 200 to the robot controller 300. This enables the robot controller 300 to transfer infusion solution and/or medical/chemical agent between the bag 5 and the syringe 6 and monitor the amount of the transferred solution at the same time.

The holding device 400 holds the syringe 6 with the syringe needle 63 pointed toward the table 201 such that the outer cylinder 61 and the syringe needle 63 of the syringe 6 are fixed and the plunger 62 is able to reciprocate relative to the outer cylinder 61. As illustrated in FIG. 2, the syringe 6 is held approximately in a horizontal position with the syringe needle 63 at approximately the same height as the port member 52 of the bag 5 placed on the table 201. In the holding device 400, a plurality of holders of different diameters (not illustrated) can be replaceable so that a plurality of syringes 6 of different diameters can be held by the holding device 400.

The preparation device 500 mixes a powdery medical/chemical agent with an infusion solution to prepare a medical/chemical solution. The preparation device 500 also mixes a liquid medical/chemical agent (liquid agent) with an infusion solution to prepare a medical/chemical solution. The robot 100 transfers the syringe 6 to the preparation device 500 and sets the syringe 6 on the preparation device 500. When the preparation assisting system 1 prepares a medical/chemical solution, the preparation device 500 manipulates the plunger 62 of the syringe 6 to cause a medical/chemical agent (a liquid medical/chemical agent or a mixture of a powdery medical/chemical agent and an infusion solution) in the agent container 7 held by the robot 100 to be introduced into the syringe 6. Next, the preparation device 500 manipulates the plunger 62 of the syringe 6 to cause the medical/chemical agent to be injected into the bag 5 held by the robot 100. In the bag 5, the contents are mixed together, resulting in a medical/chemical solution. A similar procedure applies in preparation of an infusion solution. The robot 100 and the preparation device 500 are non-limiting examples of the robot recited in the appended claims.

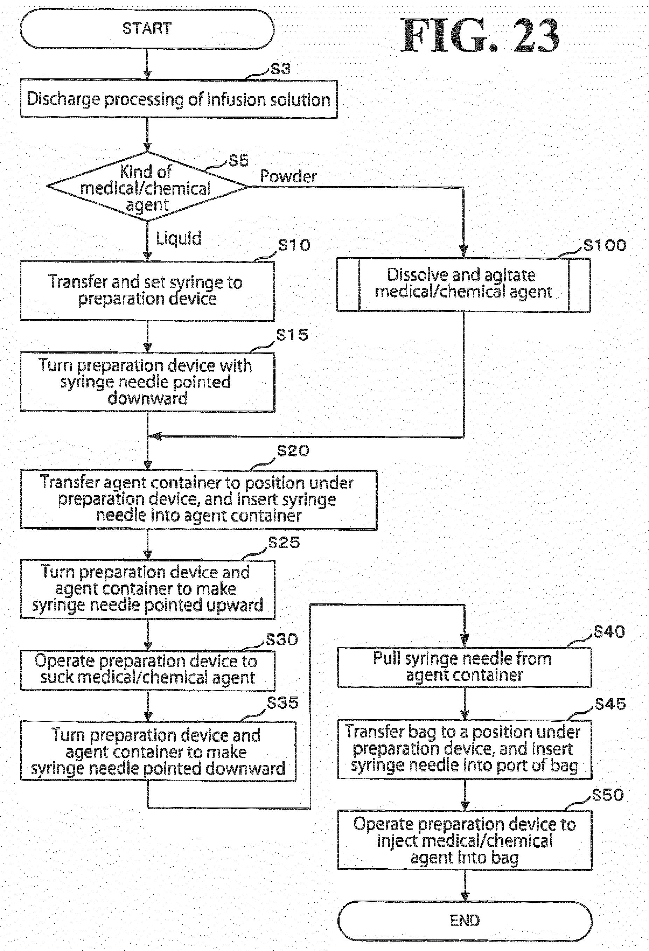

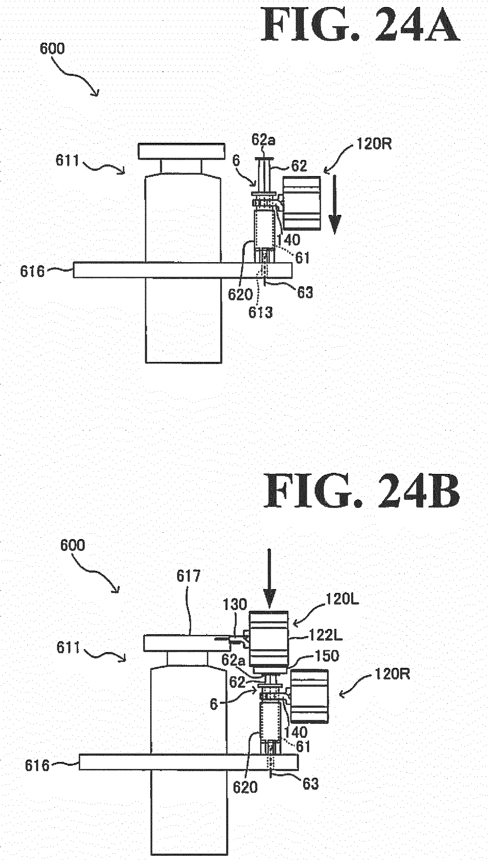

The washer 600 washes a used bag 5. When a volatile medical/chemical agent has been used, it is possible for the medical/chemical agent to remain attached to the bag 5, in the preparation chamber 2. In the preparation assisting system 1, the washer 600 washes the bag 5 using a cleaning solution such as ozone water to prevent hazardous substance from escaping outside the preparation chamber 2. The washer 600 is also used to discharge infusion solution (see FIGs. 23, 24A, and 24B, described later).

The agitator 700 is used for dissolving-agitating processing of dissolving and agitating a powdery medical/chemical agent. After the robot 100 has injected a predetermined amount of infusion solution into the agent container 7 containing a powdery medical/chemical agent, the robot 100 sets the agent container 7 on the agitator 700. The agitator 700 causes the set agent container 7 to vibrate to dissolve the medical/chemical agent in the infusion solution.

The robot controller 300 is connected to elements such as the robot 100 and the preparation device 500 in a mutually communicative manner to control motions of elements such as the robot 100 and the preparation device 500. The robot controller 300 may be integral to or separate from elements such as the robot 100 and the preparation device 500. The robot controller 300 is implemented in the form of a computer that includes elements such as an arithmetic and/or logic operator, a recording device, and an input device. The robot controller 300 may also be combined with a programmable logic controller (PLC).

### 2. Configuration of Robot

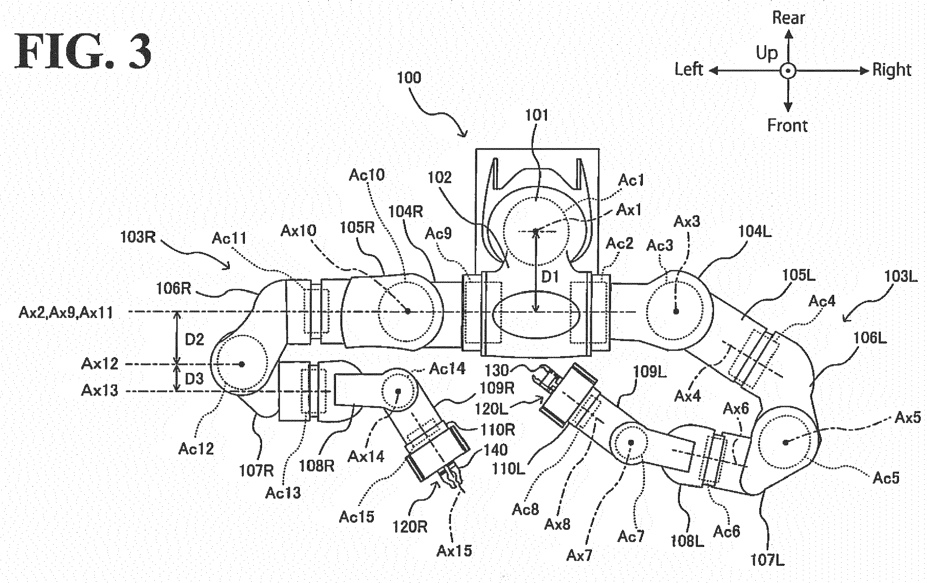

Next, an example configuration of the robot 100 will be described by referring to FIGs. 2 and 3.

As illustrated in FIGs. 2 and 3, the robot 100 is a "two-arm robot" including a base 101, a body 102, and two arms 103L and 103R. The two arms 103L and 103R are separate from each other. It will be understood by those skilled in the art that the robot 100 may not necessarily be a two-arm robot but may be a single-arm robot.

The base 101 is fixed to the installation surface on which the robot 100 is installed (in this embodiment, the floor surface of the preparation chamber 2) using anchor bolts, for example. It will be understood by those skilled in the art that the base 101 may be fixed to a surface other than the floor surface of the preparation chamber 2. Other example surfaces include, but are not limited to, a ceiling surface and a side surface of the preparation chamber 2.

The body 102 is supported by the leading end of the base 101 turnably about axis center Ax1, which is approximately perpendicular to a fixed surface of the base 101. The body 102 is driven by an actuator Ac1, which is located at the joint between the body 102 and the base 101, to turn about the axis center Ax1 relative to the leading end of the base 101.

The arm 103L is rotatably supported by one side portion of the body 102. The arm 103L includes a shoulder 104L, an upper arm A 105L, an upper arm B 106L, a lower arm 107L, a wrist A 108L, a wrist B 109L, and a flange 110L.

The shoulder 104L is supported by one side portion of the body 102 rotatably about axis center Ax2, which is approximately perpendicular to the axis center Ax1. The shoulder 104L is driven by an actuator Ac2, which is located at the joint between the shoulder 104L and the body 102, to rotate about the axis center Ax2 relative to the one side portion of the body 102.

The upper arm A 1 05L is supported by the leading end of the shoulder 104L turnably about axis center Ax3, which is approximately perpendicular to the axis center Ax2. The upper arm A 105L is driven by an actuator Ac3, which is located at the joint between the upper arm A 105L and the shoulder 104L, to turn about the axis center Ax3 relative to the leading end of the shoulder 104L.

The upper arm B 106L is supported by the leading end of the upper arm A 105L rotatably about axis center Ax4, which is approximately perpendicular to the axis center Ax3. The upper arm B 106L is driven by an actuator Ac4, which is located at the joint between the upper arm B 106L and the upper arm A 105L, to rotate about the axis center Ax4 relative to the leading end of the upper arm A 105L.

The lower arm 107L is supported by the leading end of the upper arm B 106L turnably about axis center Ax5, which is approximately perpendicular to the axis center Ax4. The lower arm 107L is driven by an actuator Ac5, which is located at the joint between the lower arm 107L and the upper arm B 106L, to turn about the axis center Ax5 relative to the leading end of the upper arm B 106L.

The wrist A 108L is supported by the leading end of the lower arm 107L rotatably about axis center Ax6, which is approximately perpendicular to the axis center Ax5. The wrist A 108L is driven by an actuator Ac6, which is located at the joint between the wrist A 108L and the lower arm 107L, to rotate about the axis center Ax6 relative to the leading end of the lower arm 107L.

The wrist B 109L is supported by the leading end of the wrist A 108L turnably about axis center Ax7, which is approximately perpendicular to the axis center Ax6. The wrist B 109L is driven by an actuator Ac7, which is located at the joint between the wrist B 109L and the wrist A 108L, to turn about the axis center Ax7 relative to the leading end of the wrist A 108L.

The flange 110L is supported by the leading end of the wrist B 109L rotatably about the axis center Ax8, which is approximately perpendicular to the axis center Ax7. The flange 110L is driven by an actuator Ac8, which is located at the joint between the flange 110L and the wrist B 109L, to rotate about the axis center Ax8 relative to the leading end of the wrist B 109L. At the leading end of the flange 110L, a first hand 120L is mounted.

The first hand 120L, which is mounted on the leading end of the arm 103L, rotates about the axis center Ax8 together with rotation of the flange 110L about the axis center Ax8. The first hand 120L includes a pair of claws 130, which are movable toward and away from each other. The first hand 120L uses the pair of claws 130 to hold elements such as the port member 52 of the bag 5 and the agent containers 7, and to manipulate the above-described devices, such as the holding device 400 and the washer 600.

The arm 103R forms a right-left symmetry with the arm 103L, and is rotatably supported by an opposite side portion of the body 102 opposite to the one side portion of the body 102. The arm 103R includes a shoulder 104R, an upper arm A 105R, an upper arm B 106R, a lower arm 107R, a wrist A 108R, a wrist B 109R, and a flange 110R.

The shoulder 104R is supported by the opposite side portion of the body 102 rotatably about axis center Ax9, which is approximately perpendicular to the axis center Ax1. The shoulder 104R is driven by an actuator Ac9, which is located at the joint between the shoulder 104R and the body 102, to rotate about the axis center Ax9 relative to the opposite side portion of the body 102.

The upper arm A 105R is supported by the leading end of the shoulder 104R turnably about axis center Ax10, which is approximately perpendicular to the axis center Ax9. The upper arm A 105R is driven by an actuator Ac10, which is located at the joint between the upper arm A 105R and the shoulder 104R, to turn about the axis center Ax10 relative to the leading end of the shoulder 104R.

The upper arm B 106R is supported by the leading end of the upper arm A 105R rotatably about axis center Ax11, which is approximately perpendicular to the axis center Ax10. The upper arm B 106R is driven by an actuator Ac11, which is located at the joint between the upper arm B 106R and the upper arm A 105R, to rotate about the axis center Ax11 relative to the leading end of the upper arm A 105R.

The lower arm 107R is supported by the leading end of the upper arm B 106R turnably about axis center Ax12, which is approximately perpendicular to the axis center Ax11. The lower arm 107R is driven by an actuator Ac12, which is located at the joint between the lower arm 107R and the upper arm B 106R, to turn about the axis center Ax12 relative to the leading end of the upper arm B 106R.

The wrist A 108R is supported by the leading end of the lower arm 107R rotatably about axis center Ax13, which is approximately perpendicular to the axis center Ax12. The wrist A 108R is driven by an actuator Ac13, which is located at the joint between the wrist A 108R and the lower arm 107R, to rotate about the axis center Ax13 relative to the leading end of the lower arm 107R.

The wrist B 109R is supported by the leading end of the wrist A 108R turnably about axis center Axl4, which is approximately perpendicular to the axis center Axl3. The wrist B 109R is driven by an actuator Ac14, which is located at the joint between the wrist B 109R and the wrist A 108R, to turn about the axis center Ax14 relative to the leading end of the wrist A 108R.

The flange 110R is supported by the leading end of the wrist B 109R rotatably about axis center Ax15, which is approximately perpendicular to the axis center Ax14. The flange 110R is driven by an actuator Ac15, which is located at the joint between the flange 110R and the wrist B 109R, to rotate about the axis center Ax 15 relative to the leading end of the wrist B 109R. At the leading end of the flange 110R, a second hand 120R is mounted.

The second hand 120R, which is mounted on the leading end of the arm 103R, rotates about the axis center Ax 15 together with rotation of the flange 11 OR about the axis center Ax15. The second hand 120R includes a pair of claws 140, which are movable toward and away from each other. The second hand 120R uses the pair of claws 140 to hold elements such as the outer cylinder 61 or the plunger 62 of the syringe 6, and to manipulate the above-described devices, such as the holding device 400 and the washer 600.

As illustrated in FIG. 3, the body 102 protrudes forward relative to the base 101 so that the axis center Ax1 is offset from the axis centers Ax2 and Ax9 by a length of *D1* in a direction approximately perpendicular to the fixed surface of the base 101. This ensures that the spaces below the shoulders 104L and 104R can be used as work spaces, and the reachable ranges of the arms 103L and 103R are widened by turning the body 102 about the axis center Ax1.

Also as illustrated in FIG. 3, the upper arm B 106R has such a shape that the axis center Ax11 and the axis center Ax 12 are offset from each other by a length of *D2* in plan view. The lower arm 107R has such a shape that the axis center Ax 12 and the axis center Ax13 are offset from each other by a length of *D3* in plan view. With the robot 100 taking such a posture that the axis center Ax11 and the axis center Ax13 are approximately parallel to each other, the offset length by which the axis center Ax11 and the axis center Ax13 are offset from each other is *"D2* + *D3".* This ensures that when the joint between the upper arm B 106R and the lower arm 107R (which correspond to human "elbow") is bent, there is enough clearance between the lower arm 107R (which corresponds to human "lower arm") and the upper arm A 105R and the upper arm B 106R (which correspond to human "upper arm"). This, in turn, provides the arm 103R with a greater degree of freedom of movability even when the second hand 120R, which is mounted on the leading end of the flange 110R, is moved close to the body 102.

This configuration of the arm 103R is similar to the configuration of the arm 103L. Specifically, the upper arm B 106L has such a shape that the axis center Ax4 and the axis center Ax5 are offset from each other by a length of *D2* in plan view. The lower arm 107L has such a shape that the axis center Ax5 and the axis center Ax6 are offset from each other by a length of *D3* in plan view. With the robot 100 taking such a posture that the axis center Ax4 and the axis center Ax6 are approximately parallel to each other, the offset length by which the axis center Ax4 and the axis center Ax6 are offset from each other is *"D2* + *D3".*

The actuators Ac1 to Ac 15 are each implemented by a servo motor equipped with a reducer and related elements. Each of the actuators Ac1 to Ac 15 includes therein an angular position sensor (not illustrated) that outputs, once in every predetermined arithmetic operation period, a signal indicating angular position of the actuator to the robot controller 300.

In the above description, a movement about an axis center parallel to the longitudinal direction (or extending direction) of the arms 103L and 103R is referred to as "rotation", whereas a movement about an axis center approximately perpendicular to the longitudinal direction (or extending direction) of the arms 103L and 103R is referred to "turning".

Also in the above description, the term "perpendicular" is not intended in a strictly accurate sense but is intended to allow some tolerance and errors inevitable in actual situations. Further, the term "perpendicular" not only means that imaginary axes are orthogonal to each other but also encompasses such cases that imaginary axes are "skew lines" and form approximately 90 degrees.

### 3. Configuration of Preparation Device

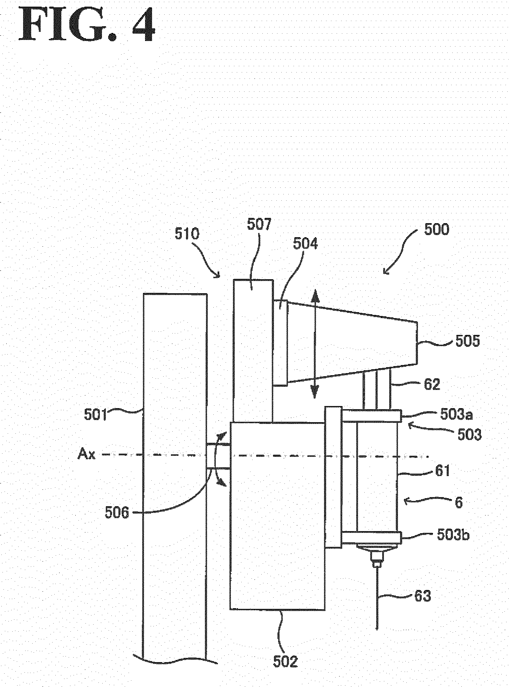

An example configuration of the preparation device 500 will be described by referring to FIG. 4.

As illustrated in FIG. 4, the preparation device 500 includes a support frame 501 and a base 502. The support frame 501 stands upright on the work table 3. The base 502 is located at the right side of the support frame 501. It will be understood by those skilled in the art that the base 502 may be located at either the right side or the left side of the support frame 501. On the base 502, a holder 503 is mounted. The holder 503 holds the syringe 6 using a pair of holder members 503a and 503b. The pair of holder members 503a and 503b are spaced apart from each other, with some space defined between the pair of holder members 503a and 503b. One holder member 503a holds one end of the outer cylinder 61 of the syringe 6 in its length direction (the upper end of the outer cylinder 61 illustrated in FIG. 4). The other holder member 503b holds the other end of the outer cylinder 61 in its length direction (the lower end of the outer cylinder 61 illustrated in FIG. 4). This enables the preparation device 500 to hold the syringe 6 while enabling the plunger 62 to reciprocate and while keeping the syringe needle 63 and the outer cylinder 61 fixed.

On the base 502, a drive mechanism 510 is mounted. The drive mechanism 510 manipulates the plunger 62. The drive mechanism 510 includes a slider 504, a clamp 505, and a linear motion motor (not illustrated). The slider 504 reciprocates on a rail 507 to move toward and away from the base 502. The clamp 505 is fixed to the slider 504 and holds a flange 62a (see FIG. 2) of the plunger 62 of the syringe 6. The linear motion motor is located in the base 502 and drives the slider 504 to reciprocate. By driving the motor the slider 504 to reciprocate, the linear motion causes the plunger 62 held by the clamp 505 to reciprocate relative to the outer cylinder 61.

The support frame 501 includes a rotational motor, not illustrated. The base 502 is mounted on a rotation axis 506 of the rotational motor, and thus is supported by the support frame 501 rotatably about axis center Ax of the rotation axis 506. This enables the preparation device 500 to freely change the posture of the syringe 6 held by the holder 503 in the rotation direction about the axis center Ax. For example, in the posture of the syringe 6 illustrated in FIG. 4, the syringe needle 63 is pointed downward. When the rotational motor rotates the base 502 by 180 degrees (°) about the axis center Ax, the posture of the syringe 6 is turned upside down, with the syringe needle 63 pointed upward.

### 4. Functional Configuration of Controller

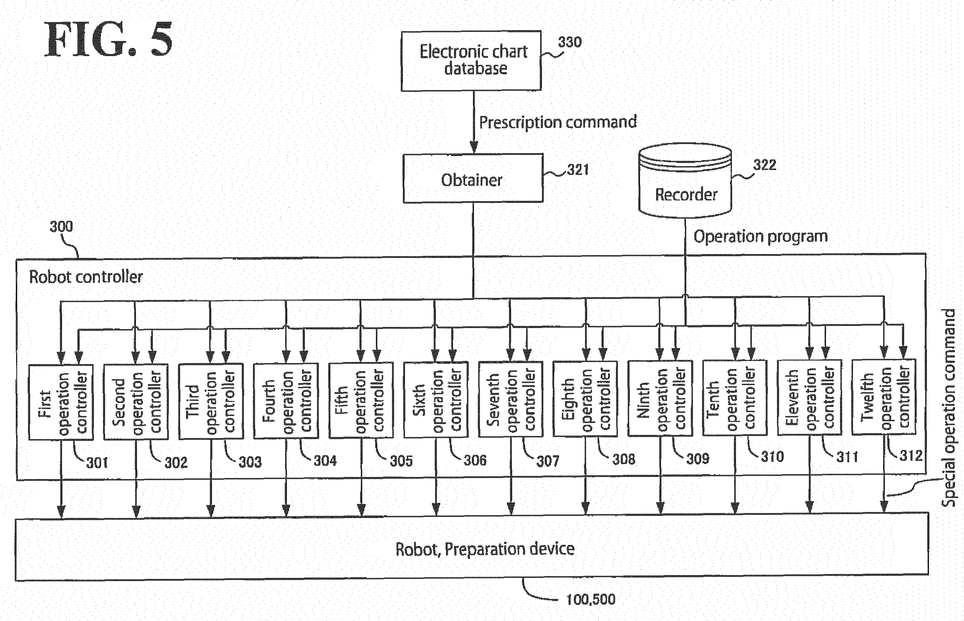

An example functional configuration of the robot controller 300 will be described by referring to FIG. 5.

The preparation assisting system 1 includes the robot controller 300, an obtainer 321, and a recorder 322. An electronic chart database 330 is located outside the preparation assisting system 1. From the electronic chart database 330, the obtainer 321 obtains a prescription command for a medical/chemical solution. The prescription command includes the kind of the agent container and the amount of administration. The recorder 322 records various kinds of operation programs for causing the robot 100 and the preparation device 500 (hereinafter occasionally referred to as "the robot 100 and related elements") to perform a preparation operation of preparing a medical/chemical solution corresponding to the prescription command. The various kinds of operation programs include a plurality of kinds of operation programs for causing the robot 100 and related elements to perform a plurality of kinds of preparation operations. The plurality of kinds of preparation operations include special operation commands respectively corresponding to the kinds of the agent containers 7.

Based on an operation program corresponding to the kind of agent container 7 included in the prescription command, the robot controller 300 controls the robot 100 and related elements to perform a preparation operation including a special operation command corresponding to the kind of agent container 7. The operation command that the robot controller 300 sends to the robot 100 and the preparation device 500 in a preparation operation includes a "common operation command" and a "special operation command".

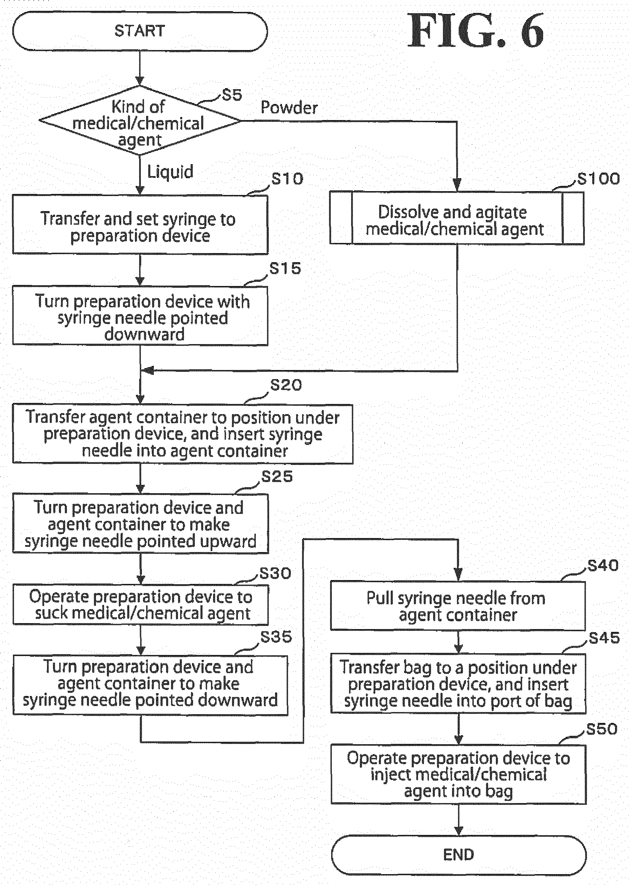

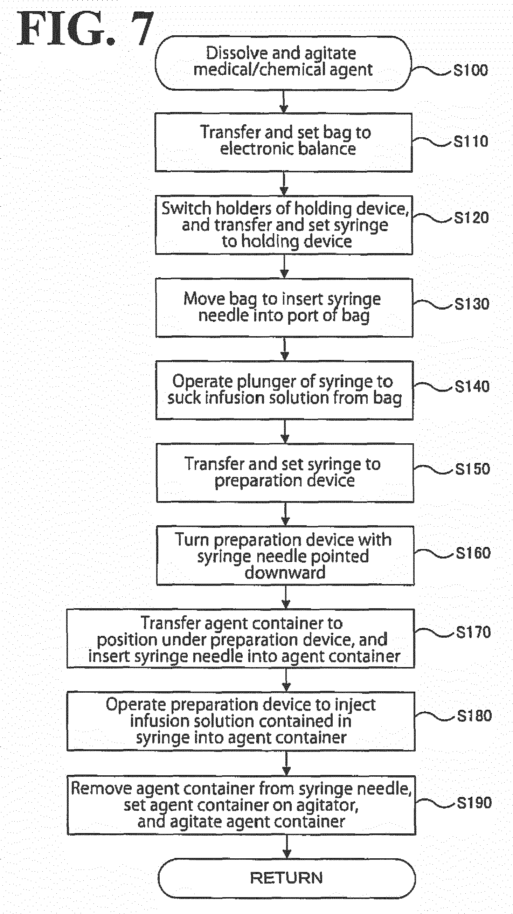

A common operation command refers to a command for causing the robot 100 and related elements to perform a "common operation" to prepare a medical/chemical agent irrespective of the kind of agent container 7. A common operation is a basic preparation operation such as those described in FIGs. 6 and 7, detailed later. Examples of the common operation include: to cause the robot 100 to transfer the syringe 6 to the preparation device 500 and set the syringe 6 on the preparation device 500; to cause the preparation device 500 to manipulate the plunger 62 of the syringe 6 to take medical/chemical agent from the agent container 7; and to cause the preparation device 500 to manipulate the plunger 62 of the syringe 6 to inject the obtained medical/chemical agent into the bag 5.

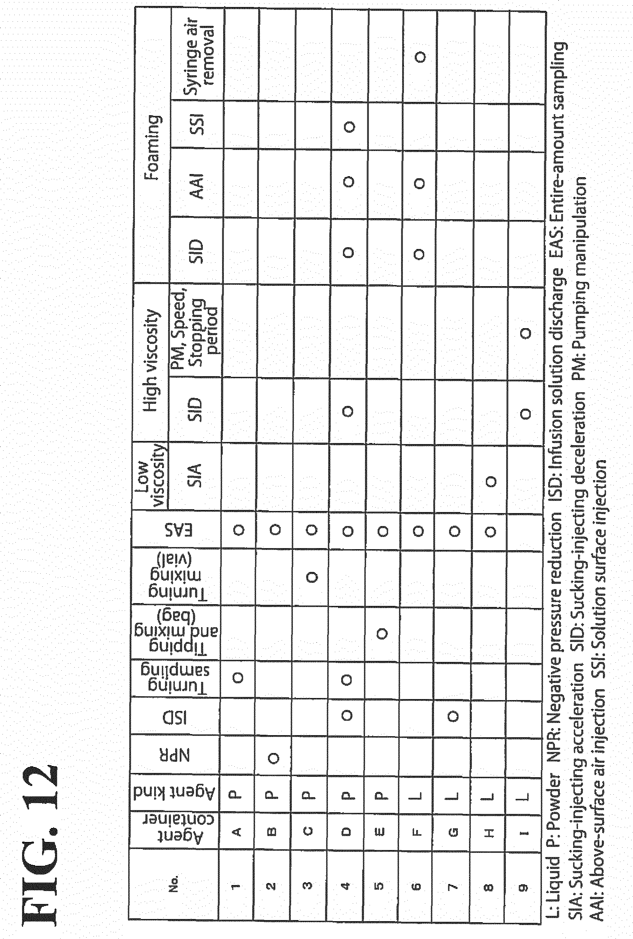

A special operation command is a command for causing the robot 100 and related elements to perform a "special operation" set for each kind of agent container 7. A special operation is a preparation operation unique to an individual kind of agent container 7, such as those described in FIGs. 12 and 13 to 25, detailed later. A non-limiting example of the special operation is to, when the medical/chemical agent has a particular property, inject the infusion solution into the agent container 7 by making the infusion solution flow along the inner wall of the agent container 7. A non-limiting example of the special operation is to, when the medical/chemical agent has a particular property, decrease or increase the manipulation speed at which the plunger 62 of the syringe 6 is manipulated relative to a predetermined reference speed.

Thus, a preparation operation performed by the robot 100 and related elements is implemented by a combination of a common operation and a special operation, which corresponds to a kind of agent container 7. It will be understood by those skilled in the art that when a special operation is unnecessary, a common operation alone may be performed.

As used herein, the terms "a kind of agent container 7", "the kind of the agent container 7", and "the kinds of the agent containers 7" are intended to not only mean the kind of the medical/chemical agent contained in the agent container 7 but also mean the capacity of the medical/chemical agent and the shape of the agent container 7 (including the shape of the glass bottle and the shape of the rubber stopper). More specifically, when different kinds of medical/chemical agents are used, different kinds of agent containers 7 are naturally used. Even though a single kind of medical/chemical agent is used, the content of the medical/chemical agent and the shapes of the agent containers 7 may vary. In these cases, different kinds of agent containers 7 are used.

As illustrated in FIG. 5, the robot controller 300 includes functions of causing the robot 100 and related elements to perform preparation operations including special operations. Specifically, the functions include a first operation controller 301, a second operation controller 302, a third operation controller 303, a fourth operation controller 304, a fifth operation controller 305, a sixth operation controller 306, a seventh operation controller 307, an eighth operation controller 308, a ninth operation controller 309, a tenth operation controller 310, an eleventh operation controller 311, and a twelfth operation controller 312. Each of the first to twelfth operation controllers 301 to 312 causes the robot 100 and related elements to perform a preparation operation including a special operation based on an operation program corresponding to the kind of the agent container 7 included in the prescription command obtained at the obtainer 321.

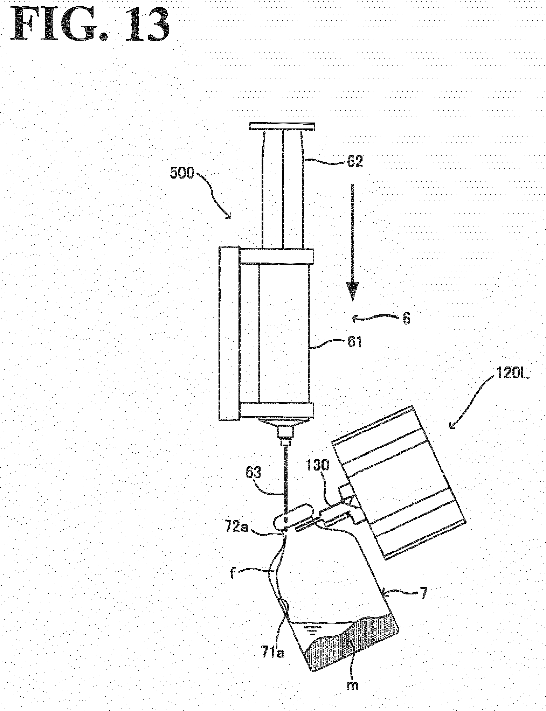

The first operation controller 301 controls the robot 100 and related elements to perform, as a special operation specified by the special operation command, a first preparation operation of injecting an infusion solution into the agent container 7 using the syringe 6 by making the infusion solution flow along the inner wall of the agent container 7. The first preparation operation will be hereinafter occasionally referred to as "solution surface injecting" (see FIGs. 12 and 13, described later).

The second operation controller 302 controls the robot 100 and related elements to perform, as a special operation specified by the special operation command, a second preparation operation of sucking or injecting a liquid medical/chemical agent or a mixture of a powdery medical/chemical agent and an infusion solution (powdery medical/chemical agent done with dissolving-agitating processing) using the syringe 6 such that the manipulation speed of the syringe 6 is lower than a first predetermined reference speed. A non-limiting example of the first predetermined reference speed is a manipulation speed at normal viscosity. The second preparation operation will be hereinafter occasionally referred to as "sucking-injecting deceleration" (see FIG. 12, described later).

The third operation controller 303 controls the robot 100 and related elements to perform, as a special operation specified by the special operation command, a third preparation operation of sucking a liquid medical/chemical agent or a mixture of a powdery medical/chemical agent and an infusion solution by intermittently manipulating the syringe 6 (pumping manipulation) such that the period of time for which the syringe 6 is stopped is longer than a predetermined reference period of time. A non-limiting example of the predetermined reference period of time is a period of time at normal viscosity. The third preparation operation will be hereinafter occasionally referred to as "extension of stopping period of time by pumping manipulation" (see FIG. 12, described later).

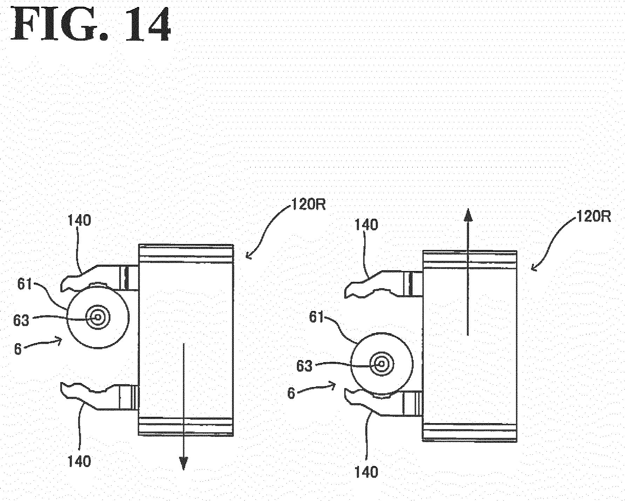

The fourth operation controller 304 controls the robot 100 and related elements to perform, as a special operation specified by the special operation command, a fourth preparation operation of striking the syringe 6 sucking a liquid medical/chemical agent or a mixture of a powdery medical/chemical agent and an infusion solution using the syringe 6. The fourth preparation operation will be hereinafter occasionally referred to as "syringe air removal" (see FIGs. 12 and 14, described later).

The fifth operation controller 305 controls the robot 100 and related elements to perform, as a special operation specified by the special operation command, a fifth preparation operation of sucking or injecting a liquid medical/chemical agent or a mixture of a powdery medical/chemical agent and an infusion solution using the syringe 6 such that the manipulation speed of the syringe 6 is higher than a second predetermined reference speed. A non-limiting example of the second predetermined reference speed is a manipulation speed at normal viscosity. The fifth preparation operation will be hereinafter occasionally referred to as "sucking-injecting acceleration" (see FIG. 12, described later).

The sixth operation controller 306 controls the robot 100 and related elements to perform, as a special operation specified by the special operation command, a sixth preparation operation of injecting the prepared medical/chemical solution into the bag 5 and swinging the bag 5. The sixth preparation operation will be hereinafter occasionally referred to as "tipping and mixing" (see FIGs. 12, 15, and 16, described later).

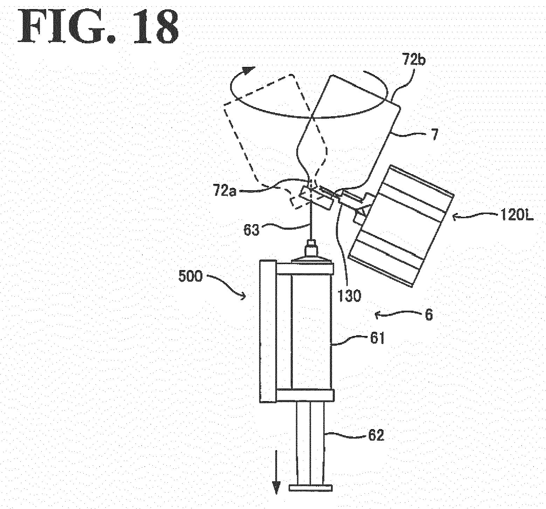

The seventh operation controller 307 controls the robot 100 and related elements to perform, as a special operation specified by the special operation command, a seventh preparation operation of sucking a liquid medical/chemical agent or a mixture of a powdery medical/chemical agent and an infusion solution from the agent container 7 using the syringe 6 while turning the bottom of the agent container 7. The seventh preparation operation will be hereinafter occasionally referred to as "turning sampling" (see FIGs. 12 and 18, described later).

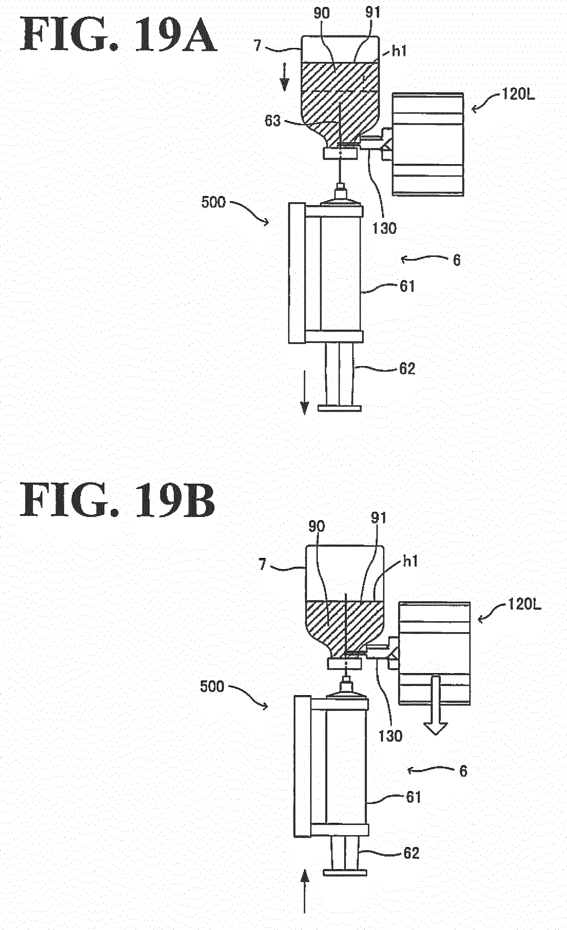

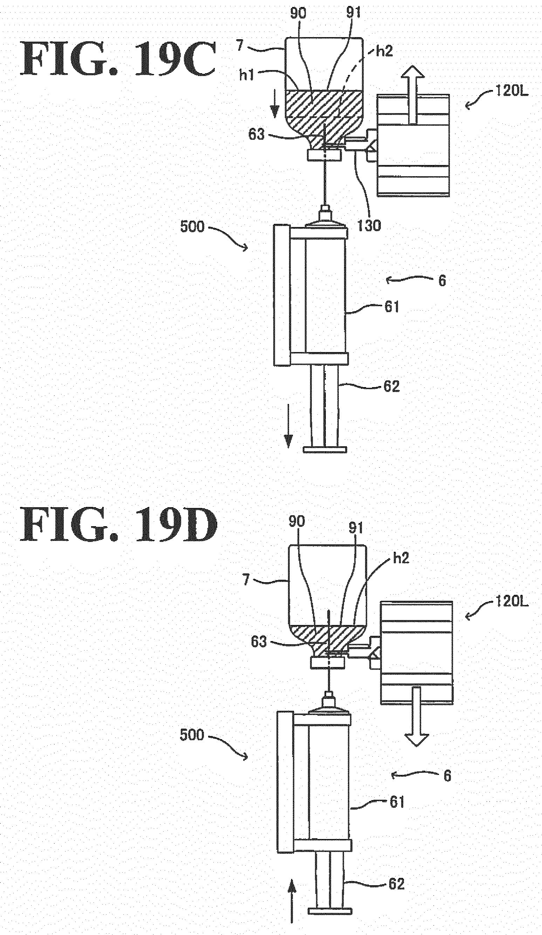

The eighth operation controller 308 controls the robot 100 and related elements to perform, as a special operation specified by the special operation command, an eighth preparation operation of sucking a liquid medical/chemical agent or a mixture of a powdery medical/chemical agent and an infusion solution from the agent container 7 using the syringe 6. Specifically, the eighth preparation operation includes: sucking the liquid medical/chemical agent or the mixture with the leading end of the syringe needle 63 located under the surface of the liquid medical/chemical agent or the mixture in the agent container 7; and injecting air into the agent container 7 with the leading end of the syringe needle 63 located above the surface of the liquid medical/chemical agent or the mixture. The eighth preparation operation will be hereinafter occasionally referred to as "above-surface air injection" (see FIGs. 12 and 19, described later).

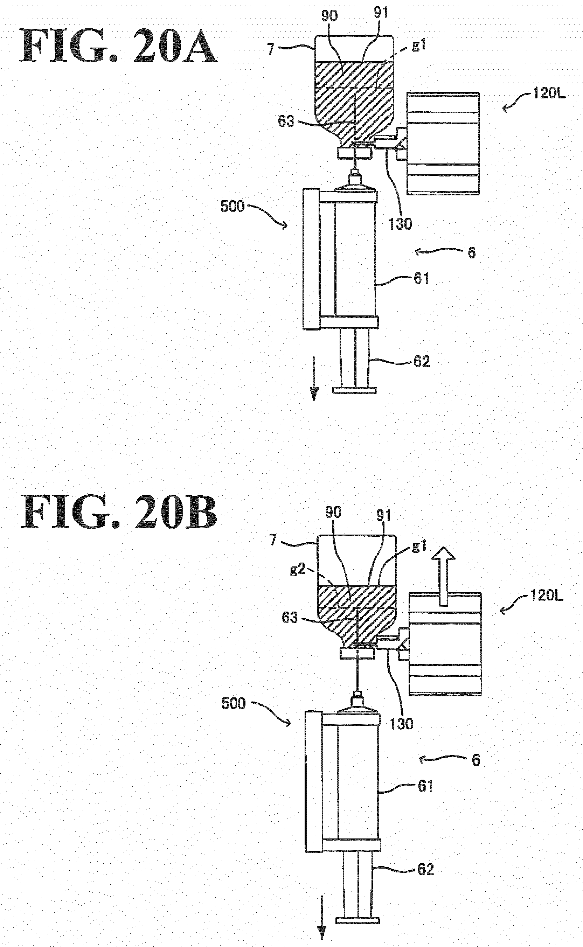

The ninth operation controller 309 controls the robot 100 and related elements to perform, as a special operation specified by the special operation command, a ninth preparation operation of sucking a liquid medical/chemical agent or a mixture of a powdery medical/chemical agent and an infusion solution from the agent container 7 using the syringe 6 while moving the agent container 7 to position the leading end of the syringe needle 63 under the surface of the liquid medical/chemical agent or the mixture in the agent container 7. The ninth preparation operation will be hereinafter occasionally referred to as "entire-amount sampling" (see FIGs. 12 and 20A to 20D, described later).

The tenth operation controller 310 controls the robot 100 and related elements to perform, as a special operation specified by the special operation command, a tenth preparation operation of injecting an infusion solution into the agent container 7 using the syringe 6 and swinging mainly the apex (rubber stopper) of the agent container 7. The tenth preparation operation will be hereinafter occasionally referred to as "turning mixing" (see FIGs. 12, 21, and 22, described later).

The eleventh operation controller 311 controls the robot 100 and related elements to perform, as a special operation specified by the special operation command, an eleventh preparation operation of removing a predetermined amount of infusion the infusion solution from the bag 5 using the syringe 6 and discharging the infusion solution. The eleventh preparation operation will be hereinafter occasionally referred to as "infusion solution discharge" (see FIGs. 24A and 24B, described later). Specifically, the eleventh operation controller 311 controls the robot 100 and related elements to remove the infusion solution from the bag 5 placed on the table 201 of the electronic balance 200 (see FIGs. 12, 23, 24A, and 24B, described later).

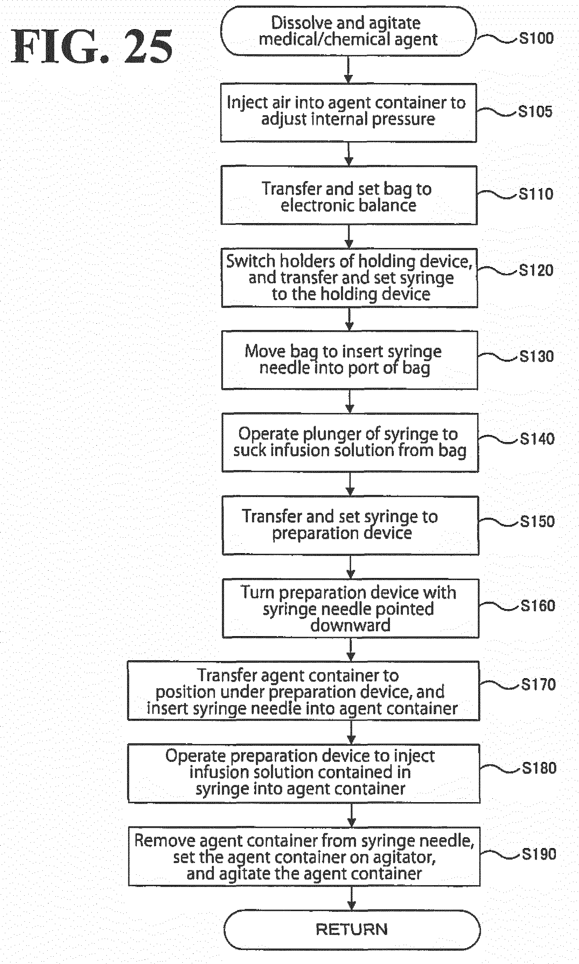

The twelfth operation controller 312 controls the robot 100 and related elements to perform, as a special operation specified by the special operation command, a twelfth preparation operation of injecting a predetermined amount of air into the agent container 7 using the syringe 6. The twelfth preparation operation will be hereinafter occasionally referred to as "negative pressure reduction" (see FIGs. 12 and 25, described later).

While in the above description a single robot controller 300 is used to control the robot 100 and the preparation device 500, it is also possible to use two controllers to respectively control the robot 100 and the preparation device 500. It is also possible to further segment the robot controller 300 into three or more functions, and use three or more controllers to deal with the functions.

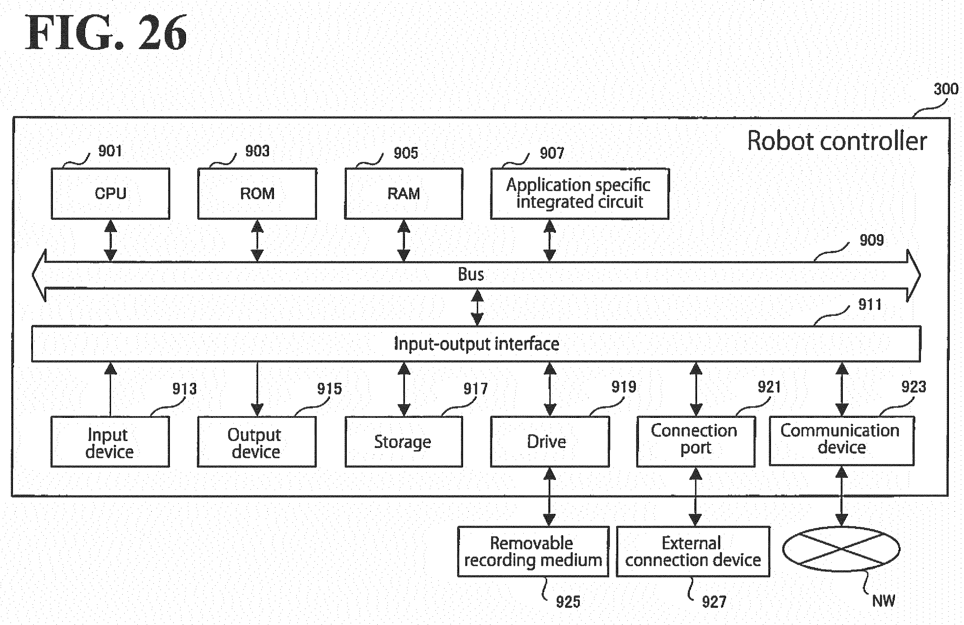

While in the above description the first to twelfth preparation operations are respectively performed by the first to twelfth operation controllers 301 to 312, this configuration is not intended in a limiting sense. For example, the first to twelfth preparation operations may be performed by a single operation controller. For further example, the first to twelfth preparation operations may be performed by further more segmented operation controllers. Each of the first to twelfth operation controllers 301 to 312 may be implemented by a program executed by a CPU 901 (see FIG. 26), or each operation controller may be partially or entirely implemented by a tangible device or devices such as an application specific integrated circuit (ASIC), a field-programmable gate array (FPGA), and other electric circuits.

### 5. Processing of Preparing Medical/chemical Solution (Common Operation)

By referring to FIG. 6, description will be made with regard to example steps of preparation processing of preparing a medical/chemical solution performed by the robot 100 and related elements and controlled by the robot controller 300. The preparation operation in the flowchart of FIG. 6 corresponds to the above-described common operation.

At step S5, the robot controller 300 obtains a prescription data from the obtainer 321, and determines whether the medical/chemical agent contained in the agent container 7 used to prepare a/medical/chemical solution based on the prescription data is liquid or powder. When the medical/chemical agent is liquid (step S5: YES), the procedure proceeds to the next step S10. When the medical/chemical agent is powder (step S5: NO), the procedure proceeds to step S100, described later, where dissolving-agitating processing of dissolving and agitating the medical/chemical agent is performed (see FIG. 7, described later). After completion of step S100, the procedure proceeds to step S20, described later.

At step S10, the robot controller 300 controls the robot 100 to transfer the syringe 6 to the preparation device 500 and set the syringe 6 on the preparation device 500 using the second hand 120R of the arm 103R.

At step S15, the robot controller 300 controls the preparation device 500 to turn the base 502 and related elements so that the syringe needle 63 of the syringe 6 that has been set is pointed downward.

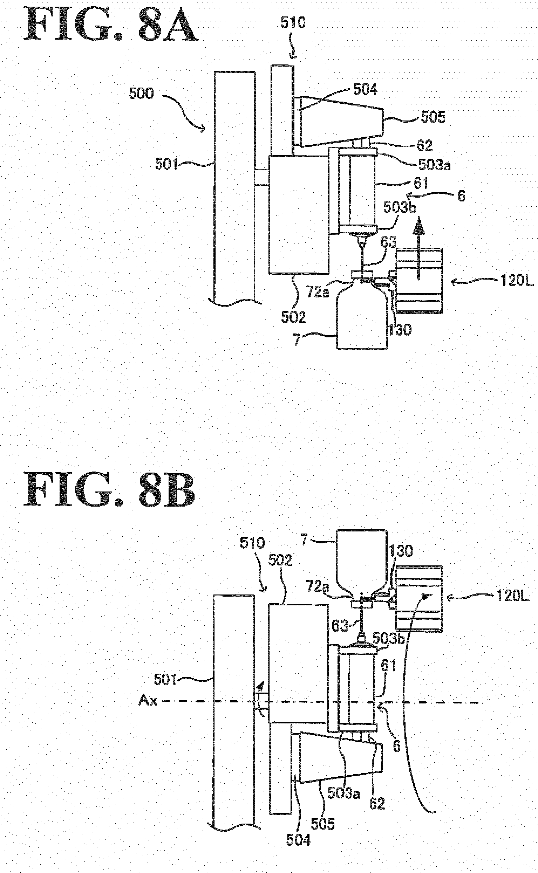

At step S20, the robot controller 300 controls the robot 100 to hold the neck 72a of the agent container 7 using the first hand 120L of the arm 103L and transfer the agent container 7 to a position under the preparation device 500. Then, the robot controller 300 controls the robot 100 to move the agent container 7 in the direction toward the syringe 6 (upward) using the first hand 120L and insert the syringe needle 63 into the agent container 7. FIG. 8A illustrates movements of the first hand 120L and related elements associated with this operation.

At step S25, the robot controller 300 controls the preparation device 500 to turn the base 502 and related elements so that the syringe needle 63 of the syringe 6 that has been set is pointed upward. Specifically, the robot 100 turns the first hand 120L about the axis center Ax as if to synchronize with the turning of the preparation device 500, thereby turning the posture of the agent container 7 upside down (that is, the direction from the upside toward the downside of the agent container 7 is opposite to the vertical direction) while making sure that the syringe needle 63 is kept in the agent container 7. FIG. 8B illustrates movements of the preparation device 500, the first hand 120L, and related elements associated with this operation.

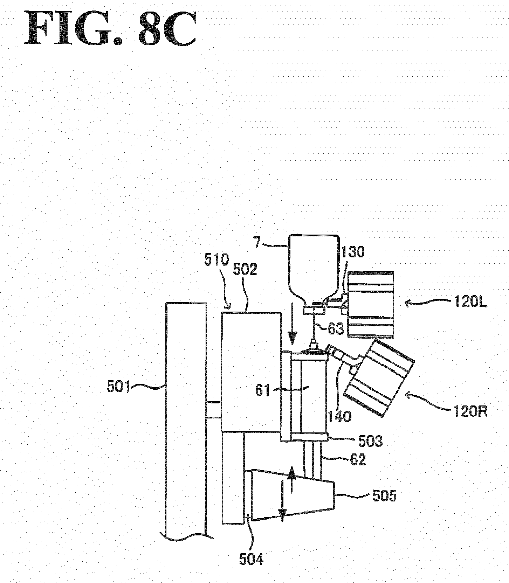

At step S30, the robot controller 300 controls the preparation device 500 to drive the drive mechanism 510. By driving the drive mechanism 510, the clamp 505 moves in the direction (downward direction) to pull the plunger 62 of the syringe 6 away from the outer cylinder 61. In this manner, the syringe 6 is caused to suck a predetermined amount of medical/chemical agent from the agent container 7 (in a case of a powdery medical/chemical agent, a mixture of the medical/chemical agent and the infusion solution done with dissolving-agitating processing). In this respect, the preparation device 500 not only causes the plunger 62 to move in the direction to pull the plunger 62 but also causes the plunger 62 to intermittently make small pumping movements and gradually move in the direction (downward direction) to pull the plunger 62 (pumping manipulation). This ensures that the medical/chemical agent and air are exchanged between the syringe 6 and the agent container 7, resulting in a smooth sucking operation of the medical/chemical agent. Also, while the syringe 6 is sucking the medical/chemical agent, the robot 100 causes the claws 140 of the second hand 120R to keep in contact with the syringe needle 63 side end of the outer cylinder 61 of the syringe 6. This eliminates or minimizes vibration of the syringe 6 and removal of the syringe 6 from the holder 503 associated with the reciprocating movement of the plunger 62, resulting in a more stable sucking operation. FIG. 8C illustrates movements of the preparation device 500, the first and second hands 120L and 120R, and related elements associated with this operation.

At step S35, the robot controller 300 controls the preparation device 500 to turn the base 502 and related elements so that the syringe needle 63 of the syringe 6 that has been set is pointed downward. Specifically, the robot 100 turns the first hand 120L about the axis center Ax as if to synchronize with the turning of the preparation device 500, thereby turning the posture of the agent container 7 upside down (that is, the direction from the upside toward the downside of the agent container 7 is identical to the vertical direction) while making sure that the syringe needle 63 is kept in the agent container 7. In this manner, the agent container 7 is moved back to its original posture.

At step S40, the robot controller 300 controls the robot 100 to move downward the first hand 120L holding the agent container 7, thereby pulling the syringe needle 63 from the agent container 7. Then, the first hand 120L transfers the agent container 7 to a predetermined place. Thus, when the syringe needle 63 is inserted and removed into and from the agent container 7, the syringe 6 is caused to take such a posture that the syringe needle 63 is pointed downward (steps S15 and S35). This eliminates or minimizes a leakage of the medical/chemical agent at the time of insertion and removal of the syringe needle 63.

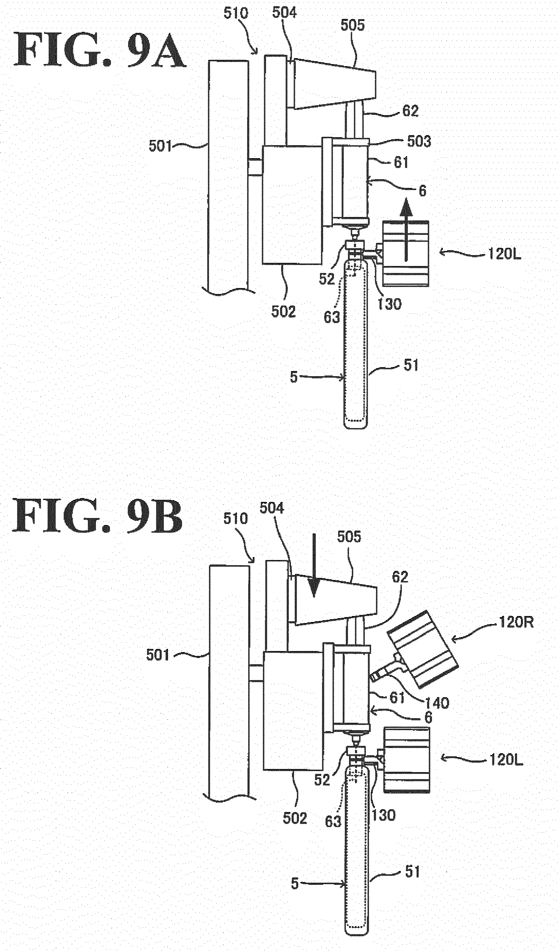

At step S45, the robot controller 300 controls the robot 100 to hold the port member 52 of the bag 5 using the first hand 120L and transfer the bag 5 to a position under the preparation device 500. It is noted that the content of the infusion solution in the bag 5 is adjusted based on the amount of the chemical solution prescribed. Then, the robot controller 300 controls the robot 100 to move the bag 5 upward using the first hand 120L toward the syringe needle 63 that is pointed downward, thereby inserting the syringe needle 63 into the port member 52. FIG. 9A illustrates movements of the first hand 120L and related elements associated with this operation.

At step S50, the robot controller 300 controls the preparation device 500 to drive the drive mechanism 510. By driving the drive mechanism 510, the clamp 505 moves the plunger 62 of the syringe 6 in the direction (downward direction) to press the plunger 62 into the outer cylinder 61, thereby injecting the medical/chemical agent contained in the syringe 6 into the bag 5. In this respect, the robot 100 causes the claws 140 of the second hand 120R to keep in contact with the outer surface of the outer cylinder 61 of the syringe 6. This eliminates or minimizes vibration of the syringe 6 and removal of the syringe 6 from the holder 503 associated with the pressing (downward) movement of the plunger 62, resulting in a more stable injection operation. FIG. 9B illustrates movements of the preparation device 500, the first and second hands 120L and 120R, and related elements associated with this operation.

In this manner, a predetermined amount of medical/chemical agent and a predetermined amount of infusion solution are mixed together into a medical/chemical solution.

It will be understood by those skilled in the art that the above-described processing steps are provided for exemplary purposes only; it is possible to delete or change one or some of the above-described steps or perform any other additional steps.

### 6. Processing of Dissolving Medical/chemical Agent (Common Operation)

By referring to FIG. 7, description will be made with regard to example steps of dissolving-agitating processing (step S100) of dissolving and agitating a powdery medical/chemical agent performed by the robot 100 and related elements. The preparation operation in the flowchart of FIG. 7 corresponds to the above-described common operation.

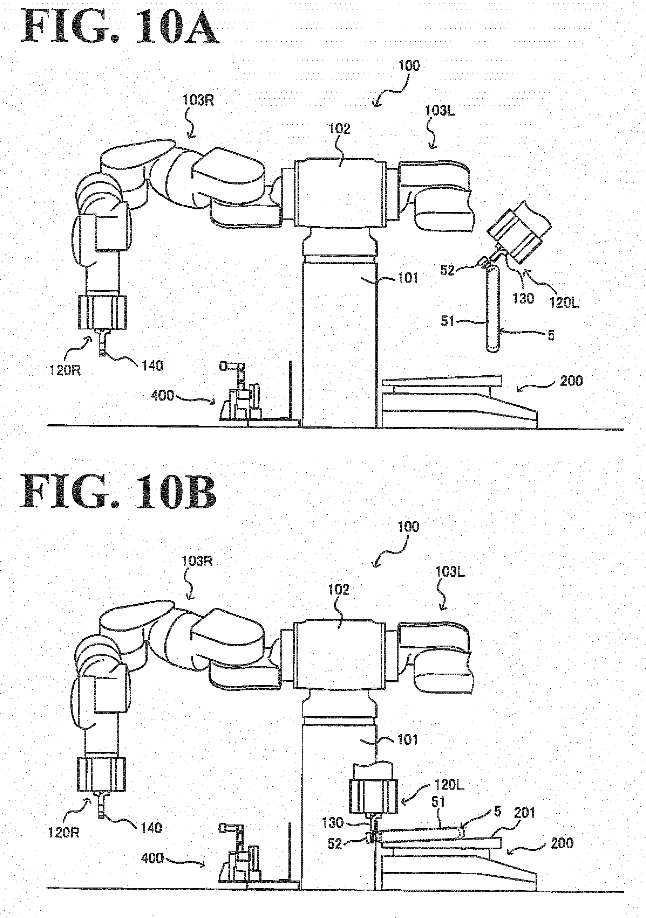

At step S110, the robot controller 300 controls the robot 100 to hold a neck 52a of the port member 52 using the first hand 120L of the arm 103L and transfer the bag 5 to the electronic balance 200. Then, the robot controller 300 controls the robot 100 to place the bag 5 on the table 201 of the electronic balance 200 using the first hand 120L. FIGs. 10A and 10B illustrates movements of the robot 100 associated with this operation. In FIGs. 10A and 10B, only relevant parts of the arm 103L are illustrated.

At step S120, the robot controller 300 controls the robot 100 to manipulate the holding device 400 using the claws 140 of the second hand 120R of the arm 103R or the claws 130 of the first hand 120L of the arm 103L so as to set a holder suitable for the syringe 6 to be used. In this embodiment, the robot 100 sets a holder for the syringe 6A (see FIG. 11A, described later). Then, the robot controller 300 controls the robot 100 to hold the outer cylinder 61 of the syringe 6 using the second hand 120R, transfer the syringe 6 to the holding device 400, and set the syringe 6 on the holding device 400. This enables the holding device 400 to hold the syringe 6 while enabling the plunger 62 to reciprocate and while keeping the outer cylinder 61 and the syringe needle 63 fixed.

At step S130, the robot controller 300 controls the robot 100 to hold the port member 52 of the bag 5 placed on the electronic balance 200 using the first hand 120L. FIG. 11A illustrates movements of the first hand 120L and related elements associated with this operation. Then, the robot 100 moves the port member 52 held in the claws 130 of the first hand 120L toward the syringe needle 63, and inserts the syringe needle 63 into the rubber stopper of the port member 52. FIG. 11B illustrates movements of the first hand 120L and related elements associated with this operation.

It will be understood by those skilled in the art that a bottle may be used in place of the bag 5. In a case of a bottle, it is difficult or impossible to suck the infusion solution on the electronic balance. In light of this, it is possible to: transfer the bottle and the syringe 6 to the preparation device 500; point the syringe needle 63 downward and insert the syringe needle 63 into the rubber stopper of the bottle; turn the preparation device 500 and cause the syringe 6 to suck the infusion solution from the bottle.

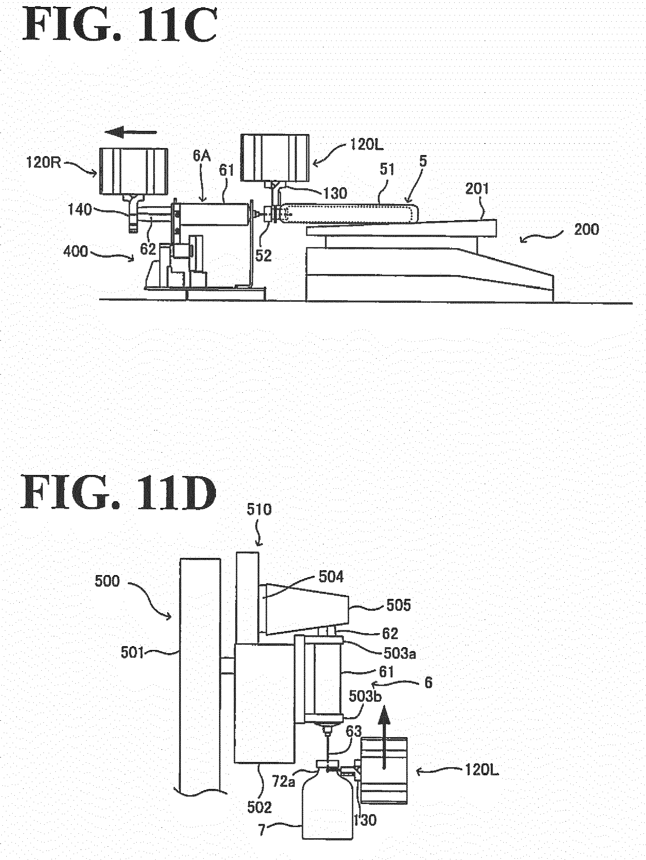

At step S140, the robot controller 300 controls the robot 100 to move the claws 140 of the second hand 120R in the direction to pull the plunger 62 of the syringe 6 from the outer cylinder 61, thereby causing the syringe 6 to suck a predetermined amount of infusion the infusion solution from the bag 5. The predetermined amount of infusion solution sucked from the bag 5 is determined based on the prescription command obtained at the obtainer 321. FIG. 11C illustrates movements of the second hand 120R and related elements associated with this operation.

At step S150, the robot controller 300 controls the robot 100 to transfer the syringe 6 to the preparation device 500 and set the syringe 6 on the preparation device 500 using the second hand 120R of the arm 103R.

At step S160, the robot controller 300 controls the preparation device 500 to turn the base 502 and related elements so that the syringe needle 63 of the syringe 6 that has been set is pointed downward.

At step S170, the robot controller 300 controls the robot 100 to hold the neck 72a of the agent container 7 using the first hand 120L and transfer the agent container 7 to a position under the preparation device 500. Then, the robot controller 300 controls the robot 100 to move the agent container 7 upward using the first hand 120L and insert the syringe needle 63 into the agent container 7. FIG. 11D illustrates movements of the first hand 120L and related elements associated with this operation.

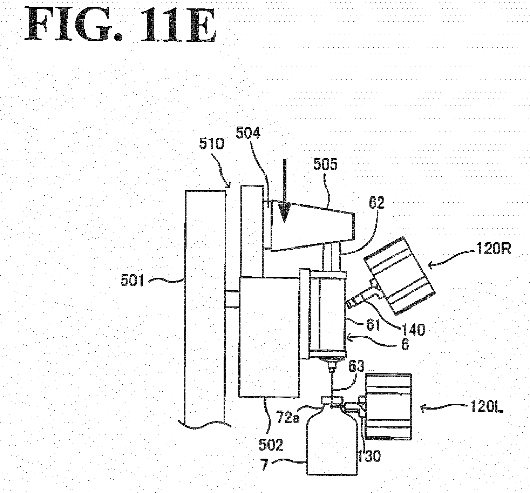

At step S180, the robot controller 300 drives the drive mechanism 510 to cause the clamp 505 to move the plunger 62 of the syringe 6 in the direction (downward direction) to press the outer cylinder 61 into and in the pulling direction (upward direction) to pull the plunger 62 away from the outer cylinder 61. These movements cause the infusion solution in the syringe 6 to be injected into the agent container 7 by causing the infusion solution to replace the gas in the agent container 7. As a result, the substance contained in the agent container 7 is a mixture of the powdery medical/chemical agent and the infusion solution. In this respect, the robot 100 causes the claws 140 of the second hand 120R to keep in contact with the outer surface of the outer cylinder 61 of the syringe 6. This eliminates or minimizes vibration of the syringe 6 and removal of the syringe 6 from the holder 503 associated with the pressing operation of the plunger 62, resulting in a more stable injection operation. FIG. 11E illustrates movements of the preparation device 500, the first and second hands 120L and 120R, and related elements associated with this operation.

At step S190, the robot controller 300 controls the robot 100 to move the agent container 7 downward using the first hand 120L, thereby removing the syringe needle 63 from the agent container 7. Then, the robot controller 300 controls the robot 100 to transfer the agent container 7 to the agitator 700 and set the agent container 7 on the agitator 700. Then, the robot controller 300 controls the agitator 700 (or the robot 100 may manipulate the agitator 700) to vibrate the agent container 7, thereby agitating the mixture of the powdery medical/chemical agent and the infusion solution and dissolving the medical/chemical agent into the infusion solution. After completion of step S190, the procedure moves to step S20 of FIG. 6.

### 7. Special Operation Performed on Individual Agent-Container Basis

As described above, the robot 100 and the preparation device 500 perform a special operation at the special operation command of the robot controller 300. The special operation is set on an individual agent-container basis, and varies depending on properties and/or characteristics of the medical/chemical agent to be used. FIG. 12 lists example special operations.

Agent container A, listed as No. 1, contains a powdery medical/chemical agent, and has such characteristics that: due to a characteristic shape of the rubber stopper, the medical/chemical agent is easily accumulable between the rubber stopper and the glass bottle of the agent container; and the agent container is not fully occupied with the medical/chemical agent. In light of the characteristics, in the agent container A, the above-described turning sampling and entire-amount sampling are performed.

Agent container B, listed as No. 2, contains a powdery medical/chemical agent, and has such characteristics that: the agent container has a highly negative pressure; and the agent container is not fully occupied with the medical/chemical agent. In light of the characteristics, in the agent container B, the above-described negative pressure reduction and entire-amount sampling are performed.

Agent container C, listed as No. 3, contains a powdery medical/chemical agent, and has such characteristics that: the medical/chemical agent is difficult to dissolve in the infusion solution injected in the agent container; and the agent container is not fully occupied with the medical/chemical agent. In light of the characteristics, in the agent container C, the above-described turning mixing and entire-amount sampling are performed.

Agent container D, listed as No. 4, contains a powdery medical/chemical agent, and has such characteristics that: there is such a prescription condition that the infusion solution be taken from the bag 5; due to a characteristic shape of the rubber stopper, the medical/chemical agent is easily accumulable between the rubber stopper and the glass bottle of the agent container; the agent container is not fully occupied with the medical/chemical agent; the medical/chemical agent dissolved in the infusion solution has a high viscosity and is easily foamable; and the medical/chemical agent is easily foamable at the time of injection of the infusion solution. In light of the characteristics, in the agent container D, the above-described infusion solution discharge, turning sampling, entire-amount sampling, sucking-injecting deceleration, above-surface air injection, and solution surface injecting are performed.

Agent container E, listed as No. 5, contains a powdery medical/chemical agent, and has such characteristics that: the medical/chemical agent is difficult to dissolve in the infusion solution, leaving a possibility of a deposit ("stacking phenomenon"); and the agent container is not fully occupied with the medical/chemical agent. In light of the characteristics, in the agent container E, the above-described tipping and mixing and entire-amount sampling are performed.

Agent container F, listed as No. 6, contains a liquid medical/chemical agent, and has such characteristics that: the agent container is not fully occupied with the medical/chemical agent; and the medical/chemical agent is easily foamable. In light of the characteristics, in the agent container F, the above-described entire-amount sampling, sucking-injecting deceleration, above-surface air injection, and syringe air removal are performed.

Agent container G, listed as No. 7, contains a liquid medical/chemical agent, and has such characteristics that: there is such a prescription condition that the infusion solution be taken from the bag 5; and the agent container is not fully occupied with the medical/chemical agent. In light of the characteristics, in the agent container G, the above-described infusion solution discharge and entire-amount sampling are performed.

Agent container H, listed as No. 8, contains a liquid medical/chemical agent, and has such characteristics that: the agent container is not fully occupied with the medical/chemical agent; and the medical/chemical agent has a low viscosity. In light of the characteristics, in the agent container H, the above-described entire-amount sampling and sucking-injecting acceleration are performed.

Agent container I, listed as No. 9, contains a liquid medical/chemical agent, and has such characteristics that: the agent container is fully occupied with the medical/chemical agent; and the medical/chemical agent has a high viscosity. In light of the characteristics, in the agent container I, the above-described sucking-injecting deceleration, and extension of stopping period of time by pumping manipulation (including sucking deceleration by pumping manipulation) are performed.

It will be understood by those skilled in the art that the above-described combinations of the special operations are provided for exemplary purposes only; it is possible to delete or change one or some of the combinations or use any other additional combinations. For example, in a case of a powdery medical/chemical agent, the period of time for agitation varies from medical/chemical agent to medical/chemical agent, and it is possible to this into consideration in making special operation combinations.

### 8. Details of Special Operations

Details of the above-described special operations will be described.

### 8-1. Solution Surface Injection

By referring to FIG. 13, solution surface injection operation will be described. The solution surface injection operation is performed by the first operation controller 301 of the robot controller 300.

If the infusion solution is forcibly injected using the syringe 6 into the agent container 7 containing a powdery medical/chemical agent (see step S180 of FIG. 7 and see FIG. 11E), foams easily occur, to the detriment of solution preparation accuracy (the same applies in the case of using a liquid medical/chemical agent).

In light of the circumstances, the first operation controller 301 of the robot controller 300 controls the robot 100 to incline the agent container 7 held in the first hand 120L relative to the syringe needle 63 of the syringe 6, thereby positioning the leading end of the syringe needle 63 near the inner wall of the neck 72a of the agent container 7. Then, with the first hand 120L holding the agent container 7 in this inclined posture, the first operation controller 301 controls the preparation device 500 to move the plunger 62 of the syringe 6 in the direction (downward direction) to press the plunger 62 into the outer cylinder 61, thereby making infusion solution f flow from the syringe 6 to the agent container 7 along the inner wall, 71a, of the agent container 7. FIG. 13 illustrates movements of the preparation device 500, the first hand 120L, and related elements associated with this operation.

Making the infusion solution f flow along the inner wall 71a of the agent container 7 eliminates or minimizes foaming while securing a sufficient injecting speed of the infusion solution f. This enables the preparation processing to be performed more accurately and in shortened takt time at the same time.

### 8-2. Sucking-injecting Deceleration

The sucking-injecting deceleration operation is performed by the second operation controller 302 of the robot controller 300.

When a medical/chemical agent (a liquid medical/chemical agent or a mixture of a powdery medical/chemical agent and an infusion solution) is sucked or injected using the syringe 6 (see step S30 of FIG. 6; FIG. 8C; step S50 of FIG. 6; and FIG. 9B), if the medical/chemical agent has a high viscosity and is sucked at a high manipulation speed into the syringe 6, the medical/chemical agent and air may not be able to properly replace with each other, to the detriment of solution preparation accuracy. Also, when an easily foamable medical/chemical agent is sucked or injected at a high manipulation speed using the syringe 6, there is a high possibility of occurrence of foams, which can cause the solution preparation accuracy to degrade.

In light of the circumstances, when a highly viscous or easily foamable medical/chemical agent is used, the second operation controller 302 of the robot controller 300 controls the preparation device 500 to make the manipulation speed of the plunger 62 of the syringe 6 lower than a first predetermined reference speed in the sucking and/or injection operation. A non-limiting example of the first predetermined reference speed is a manipulation speed in the case of a medical/chemical agent having normal viscosity).

This enables the medical/chemical agent and air to properly replace with each other and eliminates or minimizes foaming while preventing the duration of the sucking and/or injection operation from becoming unnecessarily long, even when a highly viscous or easily foamable medical/chemical agent is used. Thus, the manipulation speed of the syringe 6 is optimized based on characteristics of the medical/chemical agent. This enables the preparation processing to be performed more accurately and in shortened takt time at the same time.

### 8-3. Extension of Stopping Period of Time by Pumping Manipulation

The extension of stopping period of time by pumping manipulation operation is performed by the third operation controller 303 of the robot controller 300.

When a medical/chemical agent (a liquid medical/chemical agent or a mixture of a powdery medical/chemical agent and an infusion solution) is sucked by intermittently manipulating the syringe 6 (see step S30 of FIG. 6; and FIG. 8C), if a highly viscous medical/chemical agent is sucked by intermittently manipulating the syringe 6 (that is, by manipulating the syringe 6 at short time intervals), the medical/chemical agent and air may not be able to properly replace with each other, to the detriment of solution preparation accuracy.

In light of the circumstances, when a highly viscous medical/chemical agent is used, the third operation controller 303 of the robot controller 300 controls the preparation device 500 to make the period of time for which the plunger 62 of the syringe 6 is stopped in the intermittent manipulation longer than a predetermined reference period of time in the sucking operation. A non-limiting example of the predetermined reference period of time is a stopping period of time in the case of a medical/chemical agent having normal viscosity. At the same time, it is possible to control the preparation device 500 to make the manipulation speed of the plunger 62 of the syringe 6 lower than the first reference speed in the sucking operation.

This enables the medical/chemical agent and air to properly replace with each other while preventing the duration of the sucking operation from becoming unnecessarily long, even when a highly viscous medical/chemical agent is used. Thus, the stopping period of time of the syringe 6 in the intermittent manipulation is optimized based on characteristics of a medical/chemical agent. This enables the preparation processing to be performed more accurately and in shortened takt time at the same time.

### 8-4. Syringe Air Removal

By referring to FIG. 14, syringe air removal operation will be described. The syringe air removal operation is performed by the fourth operation controller 304 of the robot controller 300.

When a medical/chemical agent (a liquid medical/chemical agent or, in a case of a powdery medical/chemical agent, a mixture of a medical/chemical agent and an infusion solution) is sucked from the agent container 7 using the syringe 6 (see step S30 of FIG. 6; and FIG. 8C), if the medical/chemical agent is sucked at a high speed using the syringe 6, foams may possibly occur in the syringe 6.

In light of the circumstances, the fourth operation controller 304 of the robot controller 300 controls the robot 100 to, during the sucking operation of the medical/chemical agent, make small reciprocating movements of the second hand 120R relative to the syringe 6 in directions perpendicular to the longitudinal direction of the syringe 6. The reciprocating movements cause the claws 140 of the second hand 120R to alternately strike the outer cylinder 61 of the syringe 6 in a gentle manner. FIG. 14 illustrates movements of the second hand 120R and related elements associated with this operation.

This causes foams occurring in the syringe 6 during the sucking operation to burst, thereby reducing foams. Thus, the syringe air removal operation eliminates or minimizes foaming while securing a sufficient speed of sucking the medical/chemical agent. This enables the preparation processing to be performed more accurately and in shortened takt time at the same time.

### 8-5. Sucking-injecting Acceleration

The sucking-injecting acceleration operation is performed by the fifth operation controller 305 of the robot controller 300.

When a medical/chemical agent (a liquid medical/chemical agent or a mixture of a powdery medical/chemical agent and an infusion solution) is sucked or injected using the syringe 6 (see step S30 of FIG. 6; FIG. 8C; step S50 of FIG. 6; and FIG. 9B), a medical/chemical agent having a low viscosity can be sucked or injected at some high manipulation speed using the syringe 6, enabling the medical/chemical agent and air to properly replace with each other. In contrast, at an excessively high manipulation speed, the medical/chemical agent and air may not be able to properly replace with each other, to the detriment of solution preparation accuracy.

In light of the circumstances, when a medical/chemical agent having a low viscosity is used, the fifth operation controller 305 of the robot controller 300 controls the preparation device 500 to make the manipulation speed of the plunger 62 of the syringe 6 higher than a second predetermined reference speed in the sucking and/or injection operation. A non-limiting example of the second predetermined reference speed is a manipulation speed in the case of a medical/chemical agent having normal viscosity.

This minimizes the duration of the sucking and/or injection operation while enabling the medical/chemical agent and air to properly replace with each other, even when a medical/chemical agent having a low viscosity is used. Thus, the manipulation speed of the syringe 6 is optimized based on characteristics of the medical/chemical agent. This enables the preparation processing to be performed more accurately and in shortened takt time at the same time.

### 8-6. Tipping and Mixing

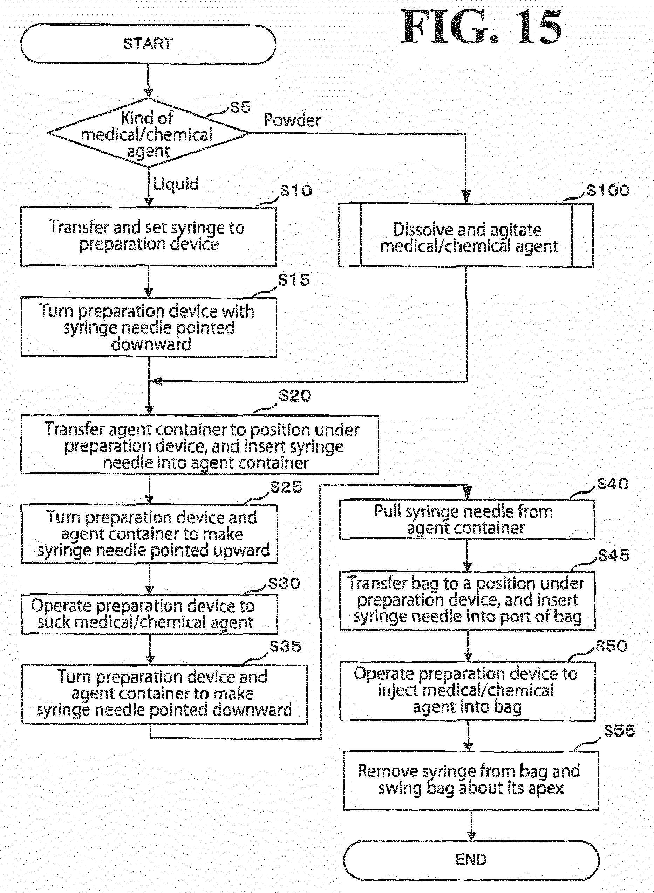

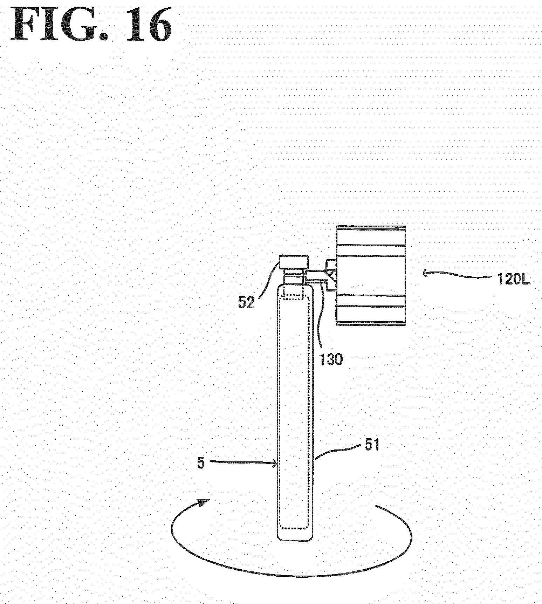

By referring to FIGs. 15 and 16, tipping and mixing operation will be described. The tipping and mixing operation is performed by the sixth operation controller 306 of the robot controller 300.

FIG. 15 is a flowchart of example steps of preparation processing of preparing a medical/chemical solution with an additional step of tipping and mixing operation. FIG. 15 is equivalent to FIG. 6 with new step S55 following step S50.

In FIG. 15, steps S5 to S50 and step S100 are identical to steps S5 to S50 and step S100 of FIG. 6 and will not be elaborated upon further here. At step S50, the prepared medical/chemical solution in the syringe 6 is injected into the bag 5. Then, the procedure proceeds to new step S55.

At step S55, the sixth operation controller 306 of the robot controller 300 controls the robot 100 to move downward the bag 5 held in the first hand 120L, thereby removing the syringe 6 from the bag 5. Then, the robot 100 transfers the bag 5 to a predetermined place. Then, using the first hand 120L, the robot 100 rotationally swings the bag 5 about the apex of the bag 5 (for example, the port member 52). FIG. 16 illustrates a movement of the first hand 120L associated with this operation. It is also possible to swing the bag 5 linearly, instead of rotationally. After completion of step S55, the procedure ends.

Another possible form of operation at step S55 is to hold the bag 5 at two positions using the first hand 120L and the second hand 120R, turn the bag 5 in a flat position, and swing the bag 5 using the arms 103L and 103R.

When a powdery medical/chemical agent is used to prepare a medical/chemical solution, the medical/chemical agent may be difficult to dissolve in the infusion solution, leaving a possibility of a deposit ("stacking phenomenon"). In light of the circumstances, the bag 5 is swung after the prepared medical/chemical solution has been injected into the bag 5. This promotes dissolusion of the medical/chemical agent in the infusion solution, and eliminates or minimizes occurrence of a deposit. As a result, the quality of the medical/chemical agent improves.

### 8-7. Turning Sampling

By referring to FIGs. 17A, 17B, 17C, and 18, rotational sampling operation will be described. The rotational sampling operation is performed by the seventh operation controller 307 of the robot controller 300.

FIGs. 17A, 17B, and 17C illustrate example rubber stopper shapes mounted on the opening of the agent container 7. In this embodiment, there are a total of three example shapes of the rubber stopper 80, namely, a rubber stopper 80A illustrated in FIG. 17A, a rubber stopper 80B illustrated in FIG. 17B, and a rubber stopper 80C illustrated in FIG. 17C.

The rubber stopper 80A illustrated in FIG. 17A includes a disc-shaped lid 81 and a protrusion 82. The lid 81 covers the opening of the agent container 7. The protrusion 82 stands upright on the lid 81 at a center portion of the lid 81, and is fittable with the opening of the agent container 7. The protrusion 82 has a hollow cylindrical structure with a taper portion 82a formed at the outer circumference of the leading end of the protrusion 82. The taper portion 82a is tapered toward the leading end of the protrusion 82 so that the protrusion 82 is easily fitted with the opening of the agent container 7.

The rubber stopper 80B illustrated in FIG. 17B includes a disc-shaped lid 81 and a protrusion 83. The lid 81 covers the opening of the agent container 7. The protrusion 83 stands upright on the lid 81 at a center portion of the lid 81, and is fittable with the opening of the agent container 7. The protrusion 83 is preferably elastic enough to be easily fitted with the opening of the agent container 7. For this and other purposes, the protrusion 83 has a cutout portion 83a. The cutout portion 83a occupies approximately a quarter of the circumferential length of the hollow cylindrical structure. Further, a circumferential groove 83b is formed approximately at a center portion of the outer surface of the protrusion 83.

The rubber stopper 80C illustrated in FIG. 17C includes a disc-shaped lid 81 and a protrusion 84. The lid 81 covers the opening of the agent container 7. The protrusion 84 stands upright on the lid 81 at a center portion of the lid 81, and is fittable with the opening of the agent container 7. The protrusion 84 is preferably elastic enough to be easily fitted with the opening of the agent container 7. For this and other purposes, the protrusion 84 has a depression 84a. The depression 84a is depressed in the height direction of the protrusion 84. In other words, the depression 84a is defined between a pair of semilunar protrusion pieces 84b, which face each other across the depression 84a.

The rubber stopper 80A has no depression on the outer surface of the protrusion 82, and thus there is no gap between the protrusion 82 and the inner wall of the opening of the agent container 7 when the protrusion 82 is fitted with the opening of the agent container 7. This makes the medical/chemical agent less likely to accumulate between the protrusion 82 and the inner wall of the opening of the agent container 7. The rubber stopper 80B has depressions, namely, the cutout portion 83a and the groove 83b, on the outer surface of the protrusion 83. This causes gaps between the protrusion 83 and the inner wall of the opening of the agent container 7 when the protrusion 83 is fitted with the opening of the agent container 7. This makes the medical/chemical agent more likely to accumulate between the protrusion 82 and the inner wall of the opening of the agent container 7. The rubber stopper 80C has the depression 84a on the outer surface of the protrusion 84. This makes the medical/chemical agent more likely to accumulate between the protrusion 82 and the inner wall of the opening of the agent container 7 when the protrusion 84 is fitted with the opening of the agent container 7. Thus, when the rubber stopper 80B or the rubber stopper 80C is used, if the accumulate of the medical/chemical agent is not sucked by the syringe 6, the solution preparation accuracy may degrade.

In light of the circumstances, when a medical/chemical agent (a liquid medical/chemical agent or a mixture of a powdery medical/chemical agent and an infusion solution) is sucked using the syringe 6, the sixth operation controller 306 of the robot controller 300 controls the robot 100 to turn the agent container 7 held upside down in the first hand 120L. Specifically, the robot 100 swings the agent container 7 about the neck 72a as if to make the bottom, 72b, of the agent container 7 draw a circle. Then, with the agent container 7 keeping turning, the preparation device 500 moves the plunger 62 of the syringe 6 in the direction (downward direction) to pull the plunger 62 away from the outer cylinder 61, thereby causing the syringe 6 to suck the medical/chemical agent from the agent container 7. FIG. 18 illustrates movements of the first hand 120L and related elements associated with this operation.

It is necessary in some cases to use the rubber stopper 80B or 80C for the agent container 7 due to characteristics of a medical/chemical agent and/or production-related necessities. With the rubber stopper 80B or 80C, however, the medical/chemical agent is easily accumulable between the rubber stopper 80B or 80C and the glass bottle of the agent container 7, as described above. This is addressed by turning the bottom 72b of the agent container 7 during the sucking operation so as to guide the accumulate of the medical/chemical agent to the insertion position of the syringe needle 63, enabling the syringe 6 to suck the accumulate of the medical/chemical agent. This enables the syringe 6 to suck approximately all the medical/chemical agent in the agent container 7, resulting in improved accuracy of the preparation processing.

### 8-8. Above-surface Air Injection

By referring to FIGs. 19A to 19D, above-surface air injection operation will be described. The above-surface air injection operation is performed by the eighth operation controller 308 of the robot controller 300.

When a medical/chemical agent (a liquid medical/chemical agent or a mixture of a powdery medical/chemical agent and an infusion solution) is sucked using the syringe 6 (see step S30 of FIG. 6; and FIG. 8C), the reciprocating movement of the plunger 62 causes the medical/chemical agent in the agent containers 7 to be sucked into the syringe 6 and causes the air in the syringe 6 to be injected into the agent container 7. The sucking of the medical/chemical agent and injection of air are performed alternately. In this respect, when an easily foamable medical/chemical agent is used, if air is injected into the agent container 7 with the leading end of the syringe needle 63 located under the surface of the medical/chemical agent, air bubbles may highly possibly develop into foams, which can cause the solution preparation accuracy to degrade.

In light of the circumstances, the eighth operation controller 308 of the robot controller 300 controls the robot 100 and the preparation device 500 to: suck the medical/chemical agent using the syringe 6 with the leading end of the syringe needle 63 located under the surface of the medical/chemical agent in the agent container 7; and inject air using the syringe 6 into the agent container 7 with the leading end of the syringe needle 63 located above the surface of the surface of the medical/chemical agent. In this manner, the medical/chemical agent and air are repeatedly replaced with each other in the sucking operation of the medical/chemical agent contained in the agent container 7.

For example, at an early stage of the sucking operation, the syringe needle 63 of the syringe 6 set on the preparation device 500 is inserted in the agent container 7 held in the first hand 120L. Specifically, as illustrated in FIG. 19A, the leading end of the syringe needle 63 is located under the surface, 91, of a medical/chemical agent 90 (a liquid medical/chemical agent or a mixture of a powdery medical/chemical agent and an infusion solution) in the agent container 7. With the syringe needle 63 in this position, the preparation device 500 moves the plunger 62 of the syringe 6 in the direction (downward direction) to pull the plunger 62 away from the outer cylinder 61, thereby causing the syringe 6 to suck the medical/chemical agent 90. By this sucking operation, the surface 91 of the medical/chemical agent 90 in the agent container 7 lowers to a height of *h1.* The height *h1* is greater than the height of the leading end of the syringe needle 63.

Next, as illustrated in FIG. 19B, the robot 100 moves the agent container 7 in the direction (downward direction) toward the syringe 6 using the first hand 120L, thereby positioning the leading end of the syringe needle 63 above the surface 91, which is now at the height *h1.* Then, the preparation device 500 moves the plunger 62 of the syringe 6 in the direction (upward direction) to press the plunger 62 into the outer cylinder 61. This causes air to be injected into the space above the surface 91 in the agent container 7 through the leading end of the syringe needle 63.

Next, as illustrated in FIG. 19C, the robot 100 moves the agent container 7 using the first hand 120L in the direction (upward direction) away from the syringe 6, thereby positioning the leading end of the syringe needle 63 under the surface 91, which is at the height *h1.* Then, the preparation device 500 moves the plunger 62 of the syringe 6 in the direction (downward direction) to pull the plunger 62 away from the outer cylinder 61, thereby causing the syringe 6 to suck the medical/chemical agent 90. By this sucking operation, the surface 91 of the medical/chemical agent 90 in the agent container 7 lowers to a height of *h2.* The height *h2* is greater than the height of the leading end of the syringe needle 63.

Next, as illustrated in FIG. 19D, the robot 100 moves the agent container 7 in the direction (downward direction) toward the syringe 6 using the first hand 120L, thereby positioning the leading end of the syringe needle 63 above the surface 91, which is now at the height *h2*. Then, the preparation device 500 moves the plunger 62 of the syringe 6 in the direction (upward direction) to press the plunger 62 into the outer cylinder 61. This causes air to be injected into the space above the surface 91 in the agent container 7 through the leading end of the syringe needle 63.

By repeating these operations, when the medical/chemical agent 90 in the agent container 7 is sucked using the syringe 6, the medical/chemical agent 90 in the agent container 7 is replaced with air injected into the space above the surface 91 with the leading end of the syringe needle 63 located above the surface 91. This eliminates or minimizes occurrence of air bubbles, which can otherwise cause foaming. As a result, the accuracy of the preparation processing improves.

### 8-9. Entire-amount Sampling

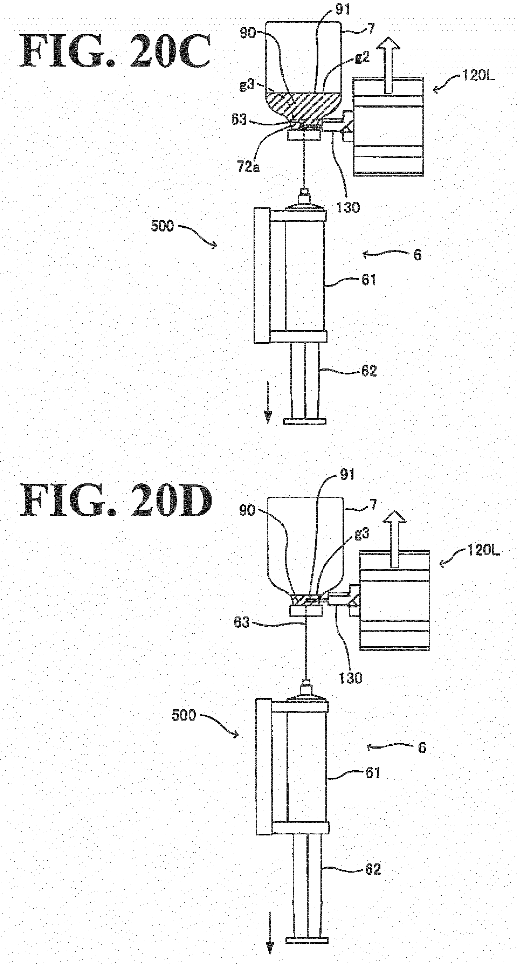

By referring to FIG. 20, entire-amount sampling operation will be described. The entire-amount sampling operation is performed by the ninth operation controller 309 of the robot controller 300.

When a particular kind of agent container 7 is used, due to characteristics of a medical/chemical agent and/or production-related necessities, the agent container 7 may contain more than a specified amount of medical/chemical agent, or the agent container 7 may contain the specified amount of medical/chemical agent that is, the agent container is not fully occupied with the medical/chemical agent). In the latter case, in order to avoid degradation of the accuracy of the preparation processing, it is preferable to suck the entire amount of the medical/chemical agent contained in the agent container 7.

In light of the circumstances, the ninth operation controller 309 of the robot controller 300 controls the robot 100 and the preparation device 500 to suck the medical/chemical agent in the agent container 7 using the syringe 6 while moving the leading end of the syringe needle 63 downward in the agent container 7.

For example, at an early stage of the entire-amount sampling, the syringe needle 63 of the syringe 6 set on the preparation device 500 is inserted in the agent container 7 held in the first hand 120L. Specifically, as illustrated in FIG. 20A, the leading end of the syringe needle 63 is located under the surface 91 of the medical/chemical agent 90 (a liquid medical/chemical agent or a mixture of a powdery medical/chemical agent and an infusion solution) in the agent container 7. With the syringe needle 63 in this position, the preparation device 500 moves the plunger 62 of the syringe 6 in the direction (downward direction) to pull the plunger 62 away from the outer cylinder 61, thereby causing the syringe 6 to suck the medical/chemical agent 90. By this sucking operation, the surface 91 of the medical/chemical agent 90 in the agent container 7 lowers to a height of *g1.* The height *g1* is greater than the height of the leading end of the syringe needle 63.

Next, as illustrated in FIG. 20B, the robot 100 moves the agent container 7 using the first hand 120L in the direction (upward direction) away from the syringe 6, thereby moving the leading end of the syringe needle 63 downward in the agent container 7. Then, the preparation device 500 moves the plunger 62 of the syringe 6 in the direction (downward direction) to pull the plunger 62 away from the outer cylinder 61, thereby causing the syringe 6 to suck the medical/chemical agent 90. By this sucking operation, the surface 91 of the medical/chemical agent 90 in the agent container 7 lowers to a height of *g2.* The height *g2* is greater than the height of the leading end of the syringe needle 63.

Next, as illustrated in FIG. 20C, the robot 100 moves the agent container 7 in the direction (upward direction) opposite to the direction toward the syringe 6 using the first hand 120L, thereby moving the leading end of the syringe needle 63 downward in the agent container 7. Then, the preparation device 500 moves the plunger 62 of the syringe 6 in the direction (downward direction) to pull the plunger 62 away from the outer cylinder 61, thereby causing the syringe 6 to suck the medical/chemical agent 90. By this sucking operation, the surface 91 of the medical/chemical agent 90 in the agent container 7 lowers to a height of *g3.* The height *g3* is greater than the height of the leading end of the syringe needle 63.

Next, as illustrated in FIG. 20D, the robot 100 moves the agent container 7 using the first hand 120L in the direction (upward direction) away from the syringe 6, thereby moving the leading end of the syringe needle 63 downward in the agent container 7. In this respect, the leading end of the syringe needle 63 is approximately at the position of the surface of the rubber stopper 80. This ensures that when the preparation device 500 moves the plunger 62 of the syringe 6 in the direction (downward direction) to pull the plunger 62 away from the outer cylinder 61, approximately the entire amount of the medical/chemical agent 90 contained in the agent container 7 can be sucked.

In this manner, approximately the entire amount of the medical/chemical agent 90 in the agent container 7 is sucked, resulting in improved accuracy of the preparation processing.

### 8-10. Turning Mixing

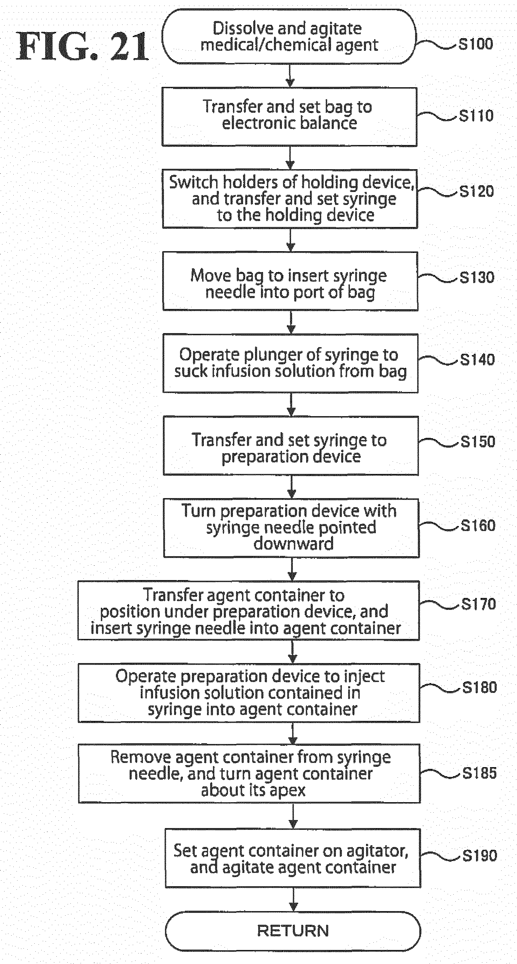

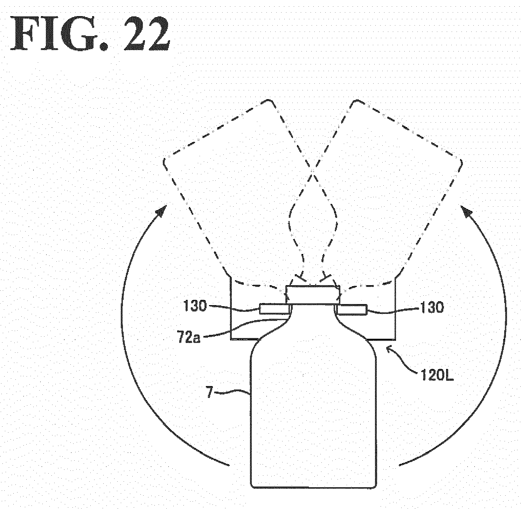

By referring to FIGs. 21 and 22, rotating and mixing operation will be described. The rotating and mixing operation is performed by the tenth operation controller 310 of the robot controller 300.

FIG. 21 is a flowchart of example steps of dissolving-agitating processing of dissolving and agitating a medical/chemical agent with an additional step of rotating and mixing operation. FIG. 21 is equivalent to FIG. 7 with new step S185 following step S180.

In FIG. 21, steps S110 to S180 and step S190 are identical to steps S110 to S180 and step S190 of FIG. 7 and will not be elaborated upon further here. At step S 180, an infusion solution is injected into the agent container 7 using the syringe 6 and mixed with a powdery medical/chemical agent contained in the agent container 7. Then, the procedure proceeds to new step S185.

At step S185, the tenth operation controller 310 of the robot controller 300 controls the robot 100 to move the agent container 7 held in the first hand 120L in the direction (downward direction) away from the syringe 6, thereby removing the syringe needle 63 from the agent container 7. Then, the tenth operation controller 310 controls the robot 100 to transfer the agent container 7 to a predetermined place using the first hand 120L. Then, the tenth operation controller 310 controls the robot 100 to, using the first hand 120L, swing the agent container 7 about its apex (rubber stopper) as if to turn the agent container 7 rightward and leftward. FIG. 22 illustrates movements of the first hand 120L and related elements associated with this operation. After completion of step S185, the procedure proceeds to step S190. At step S190, the tenth operation controller 310 controls the robot 100 to set the agent container 7 on the agitator 700 using the first hand 120L, and controls the agitator 700 to agitate the agent container 7.

When an infusion solution is injected into the agent container 7 containing a powdery medical/chemical agent to dissolve the powdery medical/chemical agent in the infusion solution, some of the medical/chemical agent may be left undissolved and remain on the surface of the infusion solution, to the detriment of solution preparation accuracy. This is addressed by swinging the agent container 7 after injecting the infusion solution into the agent container 7, as described above. This makes the infusion solution spread approximately throughout the medical/chemical agent before the agent container 7 is agitated. This enables the medical/chemical agent to be more easily dissolved in the infusion solution. This shortens the period of time necessary for the dissolving-agitating processing and prevents the medical/chemical agent from being left undissolved, resulting in improved accuracy of the preparation processing.

### 8-11. Infusion Solution Discharge

By referring to FIGs. 23, 24A and 24B, infusion solution discharge operation will be described. The infusion solution discharge operation is performed by the eleventh operation controller 311 of the robot controller 300.

When a medical/chemical solution is prepared using an infusion solution, it is in some cases necessary in advance to remove a predetermined amount of infusion solution from the bag 5 and remove the infusion solution so as to adjust the amount of the prepared medical/chemical solution to the capacity of the bag 5 or so as to adjust the amount of the prepared medical/chemical solution to the prescription amount specified by the prescription command. This discharge work, however, is laborious for workers to perform manually and can inhibit the attempt to promote automation of operations.

In light of the circumstances, the eleventh operation controller 311 of the robot controller 300 controls the robot 100 to perform, in advance in the preparation processing, discharge operation of discharging a predetermined amount of infusion solution from the bag 5.

FIG. 23 is a flowchart of example steps of preparation processing of preparing a medical/chemical solution with an additional step of infusion solution discharge operation. FIG. 23 is equivalent to FIG. 6 with new step S3 performed before step S5.

Referring to FIG. 23, at step S3, the eleventh operation controller 311 of the robot controller 300 controls the robot 100 to perform steps S110 to S140 of FIG. 7, thereby sucking a predetermined amount of infusion solution from the bag 5 using the syringe 6. The predetermined amount of infusion solution is set based on the prescription command.

Next, the robot 100 holds the outer cylinder 61 of the syringe 6 using the second hand 120R, transfers the syringe 6 to the washer 600, and sets the syringe 6 on a discharge holder 620. The discharge holder 620 is located on a lid plate 616 of a lid unit 611 of the washer 600. The lid plate 616 is mounted on a washing tank 610 (see FIG. 1). FIG. 24A illustrates movements of the second hand 120R and related elements associated with this operation.

As illustrated in FIG. 24B, a pressure member 150 is located on the base, 122L, of the first hand 120L. With the second hand 120R holding the outer cylinder 61 of the syringe 6, the robot 100 presses the pressure member 150 against the flange 62a of the plunger 62 of the syringe 6, thereby moving the plunger 62 in the direction (downward direction) to press the plunger 62 into the outer cylinder 61. This causes the infusion solution in the syringe 6 to be discharged into the washing tank 610 through the syringe needle 63. FIG. 24B illustrates movements of the second hand 120R, the first hand 120L, and related elements associated with this operation. It will be understood by those skilled in the art that the pressure member 150 may not necessarily be provided; instead, it is possible to press the first hand 120L itself (for example, the claws 130) against the flange 62a of the plunger 62. In FIGs. 24A and 24B, the washing tank 610 of the washer 600 is not illustrated. After completion of step S3, the procedure proceeds to step S5. Steps S5 to S50 and step S100 are identical to steps S5 to S50 and step S100 of FIG. 6 and will not be elaborated upon further here.

Causing the robot 100 to perform discharge work of discharging the infusion solution promotes automation of the preparation work as a whole, including the discharge work, and saves workers the burden of discharging the infusion solution.

While in the above description the infusion solution is discharged into the washing tank 610 of the washer 600, this is not intended as limiting the disposal site of the infusion solution. For example, other than the washer 600, the preparation assisting system 1 may have additional waste disposal equipment for waste such as the infusion solution and medical/chemical agent. In this case, the infusion solution may be discharged into the waste disposal equipment.

### 8-12. Negative Pressure Reduction

By referring to FIG. 25, negative pressure reduction operation will be described. The negative pressure reduction operation is performed by the twelfth operation controller 312 of the robot controller 300.

FIG. 25 is a flowchart of example steps of dissolving-agitating processing of dissolving and agitating a medical/chemical agent with an additional step of negative pressure reduction operation. FIG. 25 is equivalent to FIG. 7 with new step S105 performed before step S110.

At step S105, the twelfth operation controller 312 of the robot controller 300 controls the robot 100 to: set the syringe 6 that is empty, only containing air, on the preparation device 500; hold the agent container 7 using the first hand 120L; and insert the syringe needle 63 into the agent container 7. Then, the preparation device 500 moves the plunger 62 of the syringe 6 in the direction to press the plunger 62 into the outer cylinder 61, thereby causing the syringe 6 to inject a predetermined amount of air into the agent container 7 through the syringe needle 63, which is now in the agent container 7. By injecting a predetermined amount of air into the agent container 7, the negative pressure in the agent container 7 is reduced.

Generally, the internal pressure of the agent container 7 is set at negative pressure. In some cases, the agent container 7 may have a comparatively high degree of negative pressure, due to characteristics of a medical/chemical agent and/or production-related necessities. If the agent container 7 has a comparatively high degree of negative pressure, when the syringe needle 63 of the syringe 6 is inserted into the rubber stopper of the agent container 7, the plunger 62 may be pulled toward the agent container 7, and the substance contained in the syringe 6 may be injected into the agent container 7, to the detriment of solution preparation accuracy.

This is addressed by injecting a predetermined amount of air into the agent container 7 using the syringe 6 before the agent container 7 is subjected to the sucking and injection operations. This ensures that the internal pressure of the agent container 7 is adjusted to a predetermined amount of pressure in advance. This, in turn, ensures that when the syringe needle 63 of the syringe 6 is inserted into the rubber stopper of the agent container 7, the plunger 62 is prevented from being pulled toward the agent container 7, resulting in improved accuracy of the preparation processing.

While in the above description a powdery medical/chemical agent is contained in the agent container 7, the negative pressure reduction processing may be applied in the cases where the medical/chemical agent is liquid.

### 9. Advantageous Effects of the Embodiment

As has been described hereinbefore, the preparation assisting system 1 according to this embodiment includes the robot 100, the preparation device 500, and the robot controller 300. The robot 100 and the preparation device 500 prepare a medical/chemical solution using a medical/chemical agent contained in the agent container 7. The robot controller 300 controls the robot 100 and the preparation device 500 to perform a preparation operation including a special operation command corresponding to the kind of the agent container 7. This configuration provides advantageous effects, some of which are described below.

Preparation assisting systems are required to operate in shortened takt time while at the same time being required to prepare medical/chemical solutions highly accurately. When, however, the medical/chemical agent to be used has particular characteristics, the attempt to increase the accuracy of the preparation processing may cause the duration of the preparation processing to elongate; conversely, the attempt to shorten the processing duration may cause the solution preparation accuracy to degrade.

In this embodiment, the robot controller 300 controls the robot 100 and related elements to perform preparation operations including special operation commands respectively corresponding to the kinds of the agent containers 7. This enables the preparation operation performed by the robot 100 and related elements to be optimized based on the kind of the agent container 7. This, in turn, enables the preparation assisting system 1 to shorten the processing duration while preparing a medical/chemical solution more accurately. This, as a result, enables preparation processing to be performed more accurately and in shortened takt time at the same time.

Also in this embodiment, the preparation assisting system 1 includes the recorder 322 and the obtainer 321. In the recorder 322, a plurality of kinds of operation programs are recorded. The plurality of kinds of operation programs are for causing the robot 100 and related elements to perform a plurality of kinds of preparation operations including special operation commands corresponding to the respective kinds of the agent containers 7. The obtainer 321 obtains a prescription command for the medical/chemical solution. Based on the operation program corresponding to the kind of agent container 7 included in the prescription command, the robot controller 300 controls the robot 100 and related elements.

This ensures that addition of a new prescription command can be flexibly dealt with by adding an operation program, and that change of a prescription command can be flexibly dealt with by changing a prescription command.

Also in this embodiment, the robot controller 300 includes the first operation controller 301. The first operation controller 301 controls the robot 100 and related elements to perform, as the special operation command, a first preparation operation of injecting an infusion solution into the agent container 7 using the syringe 6 by making the infusion solution flow along the inner wall 71a of the agent container. This configuration provides advantageous effects, some of which are described below.

If the infusion solution f is forcibly injected into the agent container 7 containing a pre-used medical/chemical agent (irrespective of whether the medical/chemical agent is powder or liquid), foams easily occur, to the detriment of solution preparation accuracy.

This is addressed in this embodiment by making the infusion solution f flow along the inner wall 71a of the agent container 7. This eliminates or minimizes foaming while securing a sufficient injecting speed of the infusion solution f. This enables the preparation processing to be performed more accurately and in shortened takt time at the same time.

Also in this embodiment, the robot controller 300 includes the second operation controller 302. The second operation controller 302 controls the robot 100 and related elements to perform, as the special operation command, a second preparation operation of sucking or injecting the medical/chemical agent or a mixture of the medical/chemical agent and an infusion solution using the syringe 6 such that the manipulation speed of the syringe 6 is lower than a first predetermined reference speed. This configuration provides advantageous effects, some of which are described below.

For example, when a highly viscous medical/chemical agent is sucked at high manipulation speed using the syringe 6, the medical/chemical agent and air may not be able to properly replace with each other, to the detriment of solution preparation accuracy. For further example, when an easily foamable medical/chemical agent is sucked or injected at high manipulation speed using the syringe 6, there is a high possibility of occurrence of foams, which can cause the solution preparation accuracy to degrade.

In this embodiment, the manipulation speed of the syringe 6 is optimized based on characteristics of the medical/chemical agent. This enables the medical/chemical agent and air to properly replace with each other and eliminates or minimizes foaming while preventing the duration of the sucking and/or injection operation from becoming unnecessarily long, even when a highly viscous or easily foamable medical/chemical agent is used. This enables the preparation processing to be performed more accurately and in shortened takt time at the same time.

Also in this embodiment, the robot controller 300 includes the third operation controller 303. The third operation controller 303 controls the robot 100 and related elements to perform, as the special operation command, a third preparation operation of sucking the medical/chemical agent or a mixture of the medical/chemical agent and an infusion solution by intermittently manipulating the syringe 6 such that the period of time for which the syringe 6 is stopped is longer than a predetermined reference period of time. This configuration provides advantageous effects, some of which are described below.

For example, if a highly viscous medical/chemical agent is sucked by intermittently manipulating the syringe 6 (that is, by manipulating the syringe 6 at short time intervals), the medical/chemical agent and air may not be able to properly replace with each other, to the detriment of solution preparation accuracy.

In this embodiment, the stopping period of time of the syringe 6 in the intermittent manipulation is optimized based on characteristics of the medical/chemical agent. This enables the medical/chemical agent and air to properly replace with each other while preventing the duration of the sucking operation from becoming unnecessarily long, even when a highly viscous medical/chemical agent is used. This enables the preparation processing to be performed more accurately and in shortened takt time at the same time.

Also in this embodiment, the robot controller 300 includes the fourth operation controller 304. The fourth operation controller 304 controls the robot 100 and related elements to perform, as the special operation command, a fourth preparation operation of sucking the medical/chemical agent or a mixture of the medical/chemical agent and an infusion solution using the syringe 6 and striking the syringe 6. This configuration provides advantageous effects, some of which are described below.

If a medical/chemical agent or other substances are sucked at a high speed using the syringe 6, foams may occur in the syringe 6, to the detriment of solution preparation accuracy.

This is addressed in this embodiment by striking the syringe 6 during the sucking operation. This causes foams to burst, reducing the number of foams. This, in turn, eliminates or minimizes foaming while securing a sufficient sucking speed at which the medical/chemical agent or other substances is sucked. This, as a result, enables the preparation processing to be performed more accurately and in shortened takt time at the same time.

Also in this embodiment, the robot controller 300 includes the fifth operation controller 305. The fifth operation controller 305 controls the robot 100 and related elements to perform, as the special operation command, a fifth preparation operation sucking or injecting the medical/chemical agent or a mixture of the medical/chemical agent and an infusion solution using the syringe 6 such that the manipulation speed of the syringe 6 is higher than a second predetermined reference speed. This configuration provides advantageous effects, some of which are described below.

When a medical/chemical agent having a low viscosity is used, the medical/chemical agent can be sucked or injected at some high manipulation speed using the syringe 6, enabling the medical/chemical agent and air to properly replace with each other. In contrast, at an excessively high manipulation speed, the medical/chemical agent and air may not be able to properly replace with each other, to the detriment of solution preparation accuracy.

In this embodiment, the manipulation speed of the syringe 6 is optimized based on characteristics of a medical/chemical agent. This ensures that when a medical/chemical agent having a low viscosity is used, the duration of the sucking and/or injection operation is minimized while enabling the medical/chemical agent and air to properly replace with each other. This enables the preparation processing to be performed more accurately and in shortened takt time at the same time.

Also in this embodiment, the robot controller 300 includes the sixth operation controller 306. The sixth operation controller 306 controls the robot 100 and related elements to perform, as the special operation command, a sixth preparation operation of injecting the prepared medical/chemical solution into the bag 5 and swinging the bag 5. This configuration provides advantageous effects, some of which are described below.

When a powdery medical/chemical agent is used to prepare a medical/chemical solution, the medical/chemical agent may be difficult to dissolve in the infusion solution, leaving a possibility of a deposit in the prepared medical/chemical solution ("stacking phenomenon").

In this embodiment, the bag 5 is swung after the prepared medical/chemical solution has been injected into the bag 5. This promotes dissolusion of the medical/chemical agent, and eliminates or minimizes occurrence of a deposit. As a result, the quality of the medical/chemical agent improves.

Also in this embodiment, the robot controller 300 includes the seventh operation controller 307. The seventh operation controller 307 controls the robot 100 and related elements to perform, as the special operation command, a seventh preparation operation of sucking the medical/chemical agent or a mixture of the medical/chemical agent and an infusion solution using the syringe 6 while turning the bottom 72b of the agent container 7. This configuration provides advantageous effects, some of which are described below.

It is necessary in some cases to use a particular rubber stopper 80 for the agent container 7 due to characteristics of a medical/chemical agent and/or production-related necessities. With the particular rubber stopper 80, however, the medical/chemical agent is easily accumulable between the rubber stopper 80 and the glass bottle of the agent container 7. If the accumulate of the medical/chemical agent is not sucked by the syringe 6, the solution preparation accuracy may degrade.

In this embodiment, the bottom 72b of the agent container 7 positioned upside down is turned during the sucking operation. This enables the syringe 6 to suck the accumulate of the medical/chemical agent. This, in turn, enables the syringe 6 to suck approximately all the medical/chemical agent in the agent container 7, resulting in improved accuracy of the preparation processing.

Also in this embodiment, the robot controller 300 includes the eighth operation controller 308. The eighth operation controller 308 controls the robot 100 and related elements to perform, as the special operation command, an eighth preparation operation of sucking the medical/chemical agent or a mixture of the medical/chemical agent and an infusion solution using the syringe 6. The eighth preparation operation includes: sucking the medical/chemical agent or the mixture with the leading end of the syringe needle 63 located under the surface 91 in the agent container 7; and injecting air into the agent container 7 with the leading end of the syringe needle 63 located above the surface 91. This configuration provides advantageous effects, some of which are described below.

When an easily foamable medical/chemical agent is sucked, if air is injected into the agent container 7 with the leading end of the syringe needle 63 located under the surface of the medical/chemical agent, air bubbles may highly possibly develop into foams, which can cause the solution preparation accuracy to degrade.

In this embodiment, air is supplied into the space above the surface 91 through the leading end of the syringe needle 63 located above the surface 91. This eliminates or minimizes foaming, resulting in improved accuracy of the preparation processing.

Also in this embodiment, the robot controller 300 includes the ninth operation controller 309. The ninth operation controller 309 controls the robot 100 and related elements to perform, as the special operation command, a ninth preparation operation of sucking the medical/chemical agent or a mixture of the medical/chemical agent and an infusion solution using the syringe 6 while moving the agent container 7 to position the leading end of the syringe needle 63 under the surface 91 in the agent container 7.

This enables the syringe 6 to suck approximately all the medical/chemical agent in the agent container 7, resulting in improved accuracy of the preparation processing.

Also in this embodiment, the robot controller 300 includes the tenth operation controller 310. The tenth operation controller 310 controls the robot 100 and related elements to perform, as the special operation command, a tenth preparation operation of injecting the infusion solution into the agent container 7 using the syringe 6 and swinging the agent container 7 about the apex of the agent container 7. This configuration provides advantageous effects, some of which are described below.

When an infusion solution is injected into the agent container 7 containing a powdery medical/chemical agent to dissolve the powdery medical/chemical agent in the infusion solution, some of the medical/chemical agent may be left undissolved and remain on the surface of the infusion solution, to the detriment of solution preparation accuracy.

In this embodiment, the agent container 7 is swung after injecting the infusion solution into the agent container 7. This makes the infusion solution spread approximately throughout the medical/chemical agent. This enables the medical/chemical agent to be more easily dissolved in the infusion solution. This shortens the period of time necessary for the dissolving-agitating processing and prevents the medical/chemical agent from being left undissolved, resulting in improved accuracy of the preparation processing.

Also in this embodiment, the robot controller 300 includes the eleventh operation controller 311. The eleventh operation controller 311 controls the robot 100 and related elements to perform, as the special operation command, an eleventh preparation operation of removing a predetermined amount of the infusion solution from the bag 5 and discharging the infusion solution. This configuration provides advantageous effects, some of which are described below.

When a medical/chemical solution is prepared using an infusion solution, it is in some cases necessary in advance to remove a predetermined amount of infusion solution from the bag 5 and remove the infusion solution so as to adjust the amount of the prepared medical/chemical solution to the capacity of the bag 5 or so as to adjust the amount of the prepared medical/chemical solution to the prescription amount specified by the prescription command. This discharge work, however, is laborious for workers to perform manually and can inhibit the attempt to promote automation of operations.

In this embodiment, the discharge work is performed by the robot 100 and related elements. This promotes automation of the preparation work as a whole, including the discharge work, and saves workers the burden of discharging the infusion solution.

Also in this embodiment, the robot controller 300 includes the twelfth operation controller 312. The twelfth operation controller 312 controls the robot 100 and related elements to perform, as the special operation command, a twelfth preparation operation of injecting a predetermined amount of air into the agent container 7 using the syringe 6. This configuration provides advantageous effects, some of which are described below.

Generally, the internal pressure of the agent container 7 is set at negative pressure. In some cases, the agent container 7 may have a comparatively high degree of negative pressure, due to characteristics of a medical/chemical agent and/or production-related necessities. If the agent container 7 has a comparatively high degree of negative pressure, when the syringe needle 63 of the syringe 6 is inserted into the rubber stopper of the agent container 7, the plunger 62 may be pulled toward the agent container 7, and the substance contained in the syringe 6 may be injected into the agent container 7, to the detriment of solution preparation accuracy.

In this embodiment, a predetermined amount of air is injected into the agent container 7 using the syringe 6 before the agent container 7 is subjected to the sucking and injection operations. This ensures that the internal pressure of the agent container 7 is adjusted to a predetermined amount of pressure in advance. This, in turn, ensures that when the syringe needle 63 of the syringe 6 is inserted into the rubber stopper of the agent container 7, the plunger 62 is prevented from being pulled toward the agent container 7, resulting in improved accuracy of the preparation processing.

### 10. Example Hardware Configuration of Robot Controller

By referring to FIG. 26, description will be made with regard to an example hardware configuration of the robot controller 300 implementing the processings performed by the operation controllers 301 to 312 and other elements that are implemented by programs executed by the CPU 901.

As illustrated in FIG. 26, the robot controller 300 includes the CPU 901, a ROM 903, a RAM 905, an application specific integrated circuit 907, an input device 913, an output device 915, a storage 917, a drive 919, a connection port 921, and a communication device 923. Examples of the application specific integrated circuit 907 include, but are not limited to, an application specific integrated circuit (ASIC) and a field-programmable gate array (FPGA). These configurations are connected to each other through a bus 909 and an input-output interface 911 so that signals are transmittable to and from the configurations.

The programs may be stored in, for example, the ROM 903, the RAM 905, or the storage 917.

In another possible embodiment, the programs may be stored in a removable recording medium 925 temporarily or permanently. Examples of the recording medium 925 include, but are not limited to, a magnetic disc such as a flexible disc; an optical disc such as a compact disc (CD), a magneto-optical (MO) disc, and a digital video disc (DVD); and a semiconductor memory. The recording medium 925 may be provided in the form of "packaged software". In this case, the programs stored in the recording medium 925 may be read by the drive 919 and stored in the recording device 917 through devices such as the input-output interface 911 and the bus 909.

In another possible embodiment, the programs may be stored in a download site or any other recording device such as a computer (not illustrated). In this case, the programs are transmitted to the communication device 923 through a network NW. Examples of the network NW include, but are not limited to, a local area network (LAN) and the Internet. Then, the programs received by the communication device 923 are stored in the recording device 917 through devices such as the input-output interface 911 and the bus 909.

In another possible embodiment, the programs may be stored in an external connection device 927. In this case, the programs are transmitted through the connection port 921 and stored in the recording device 917 through devices such as the input-output interface 911 and the bus 909.

Then, the CPU 901 performs various processings based on the programs stored in the recording device 917 so as to implement the processings performed at the elements such as the operation controllers 301 to 312. In executing the programs, the CPU 901 may read the programs directly from the recording device 917 or may temporarily load the programs in the RAM 905. When the CPU 901 receives the programs through devices such as the communication device 923, the drive 919, and the connection port 921, the CPU 901 may execute the programs without storing the programs in the recording device 917.

As necessary, the CPU 901 may perform the various processings based on signals or information input through the input device 913, such as a mouse, a keyboard, and a microphone (not illustrated).

Then, the CPU 901 may output results of the processings from the output device 915, such as a display device and a sound output device. As necessary, the CPU 901 may send results of the processings through the communication device 923 and the connection port 921 and store the results of the processings in the recording device 917 and/or the removable recording medium 925.

Otherwise, the above-described embodiments and modification embodiment may be combined in any manner deemed suitable. Obviously, numerous modifications and variations of the preparation work are possible in light of the above teachings. It is therefore to be understood that within the scope of the appended claims, the preparation work may be practiced otherwise than as specifically described herein.
1 Preparation assisting system
5 Bag (which is a non-limiting example of the container and chemical solution container recited in the appended claims)
6 Syringe (which is a non-limiting example of the syringe recited in the appended claims)
63 Syringe needle
7 Agent container
71a Inner wall
72b Bottom
90 Medical/chemical agent
91 Surface, solution surface
100 Robot (which is a non-limiting example of the robot recited in the appended claims)
300 Robot controller
301 First operation controller
302 Second operation controller
303 Third operation controller
304 Fourth operation controller
305 Fifth operation controller
306 Sixth operation controller
307 Seventh operation controller
308 Eighth operation controller
309 Ninth operation controller
310 Tenth operation controller
311 Eleventh operation controller
312 Twelfth operation controller
321 Obtainer
322 Recorder
500 Preparation device (which is a non-limiting example of the robot recited in the
appended claims)
f Infusion solution
m Medical/chemical agent

## Claims

1. A preparation assisting system (1), **characterized by**:
a robot (100, 500) configured to prepare a medical/chemical solution using a medical/chemical agent contained in an agent container; and
a robot controller (300) configured to control the robot (100, 500) to perform a preparation operation including a special operation command corresponding to a kind of the agent container.

2. The preparation assisting system (1) according to claim 1, further comprising:
a recorder (322) in which a plurality of kinds of operation programs are recorded, the plurality of kinds of operation programs being for causing the robot (100, 500) to perform a plurality of kinds of preparation operations including special operation commands corresponding to respective kinds of the agent container; and
an obtainer (321) configured to obtain a prescription command for the medical/chemical solution, the prescription command including one operation program among the plurality of kinds of operation programs,
wherein the robot controller (300) is configured to control the robot (100, 500) based on the one operation program included in the prescription command.

3. The preparation assisting system (1) according to claim 1 or 2, wherein the robot controller (300) comprises a first operation controller (301) configured to control the robot (100, 500) to perform, as the special operation command, a first preparation operation of injecting an infusion solution into the agent container using a syringe by making the infusion solution flow along an inner wall of the agent container.

4. The preparation assisting system (1) according to any one of claims 1 to 3, wherein the robot controller (300) comprises a second operation controller (302) configured to control the robot (100, 500) to perform, as the special operation command, a second preparation operation of sucking or injecting the medical/chemical agent or a mixture of the medical/chemical agent and an infusion solution using a syringe such that a manipulation speed of the syringe is lower than a first predetermined reference speed.

5. The preparation assisting system (1) according to any one of claims 1 to 4, wherein the robot controller (300) comprises a third operation controller (303) configured to control the robot (100, 500) to perform, as the special operation command, a third preparation operation of sucking the medical/chemical agent or a mixture of the medical/chemical agent and an infusion solution by intermittently manipulating a syringe such that a period of time for which the syringe is stopped is longer than a predetermined reference period of time.

6. The preparation assisting system (1) according to any one of claims 1 to 5, wherein the robot controller (300) comprises a fourth operation controller (304) configured to control the robot (100, 500) to perform, as the special operation command, a fourth preparation operation of sucking the medical/chemical agent or a mixture of the medical/chemical agent and an infusion solution using a syringe and striking the syringe.

7. The preparation assisting system (1) according to any one of claims 1 to 6, wherein the robot controller (300) comprises a fifth operation controller (305) configured to control the robot (100, 500) to perform, as the special operation command, a fifth preparation operation of sucking or injecting the medical/chemical agent or a mixture of the medical/chemical agent and an infusion solution using a syringe such that a manipulation speed of the syringe is higher than a second predetermined reference speed.

8. The preparation assisting system (1) according to any one of claims 1 to 7, wherein the robot controller (300) comprises a sixth operation controller (306) configured to control the robot (100, 500) to perform, as the special operation command, a sixth preparation operation of injecting the prepared medical/chemical solution into the solution container and swinging the solution container.

9. The preparation assisting system (1) according to any one of claims 1 to 8, wherein the robot controller (300) comprises a seventh operation controller (307) configured to control the robot (100, 500) to perform, as the special operation command, a seventh preparation operation of sucking the medical/chemical agent or a mixture of the medical/chemical agent and an infusion solution using a syringe while turning a bottom of the agent container.

10. The preparation assisting system (1) according to any one of claims 1 to 9, wherein the robot controller (300) comprises an eighth operation controller (308) configured to control the robot (100, 500) to perform, as the special operation command, an eighth preparation operation of sucking the medical/chemical agent or a mixture of the medical/chemical agent and an infusion solution using a syringe, the eighth preparation operation comprising:
sucking the medical/chemical agent or the mixture with a leading end of a needle of the syringe located under a surface of the medical/chemical agent or the mixture in the agent container; and
injecting air into the agent container with the leading end of the needle of the syringe located above the surface of the medical/chemical agent or the mixture.

11. The preparation assisting system (1) according to any one of claims 1 to 10, wherein the robot controller (300) comprises a ninth operation controller (309) configured to control the robot (100, 500) to perform, as the special operation command, a ninth preparation operation of sucking the medical/chemical agent or a mixture of the medical/chemical agent and an infusion solution using a syringe while moving the agent container to position a leading end of a needle of the syringe under a surface of the medical/chemical agent or the mixture in the agent container.

12. The preparation assisting system (1) according to any one of claims 1 to 11, wherein the robot controller (300) comprises a tenth operation controller (310) configured to control the robot (100, 500) to perform, as the special operation command, a tenth preparation operation of injecting an infusion solution into the agent container using a syringe and swinging the agent container about an apex of the agent container.

13. The preparation assisting system (1) according to any one of claims 1 to 12, wherein the robot controller (300) comprises an eleventh operation controller (311) configured to control the robot (100, 500) to perform, as the special operation command, an eleventh preparation operation of removing a predetermined amount of an infusion solution from a container and discharging the infusion solution.

14. The preparation assisting system (1) according to any one of claims 1 to 13, wherein the robot controller (300) comprises a twelfth operation controller (312) configured to control the robot (100, 500) to perform, as the special operation command, a twelfth preparation operation of injecting a predetermined amount of air into the agent container using a syringe.

15. A preparation method using a robot (100, 500), **characterized by**:
obtaining a prescription command for a medical/chemical solution;
selecting a preparation operation from among a plurality of kinds of preparation operations including special operation commands respectively corresponding to a plurality of kinds of an agent container, the preparation operation corresponding to the prescription command; and
controlling the robot (100, 500) to prepare, based on the selected preparation operation, the medical/chemical solution using a medical/chemical agent contained in the agent container.
